(19) Europäisches Patentamt
European Patent Office
Office européen des brevets

(11) **EP 4 665 034 A1**

(12) **EUROPEAN PATENT APPLICATION**
published in accordance with Art. 153(4) EPC

(43) Date of publication:
**17.12.2025 Bulletin 2025/51**

(21) Application number: **24763089.0**

(22) Date of filing: **26.02.2024**

(51) International Patent Classification (IPC):
**H04W 72/04** (2023.01)

(52) Cooperative Patent Classification (CPC):
**H04L 5/00; H04W 72/04; H04W 72/21**

(86) International application number:
**PCT/CN2024/078568**

(87) International publication number:
**WO 2024/179407 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023 CN 202310216808
28.04.2023 CN 202310487760**

(71) Applicant: **Huawei Technologies Co., Ltd.
Shenzhen, Guangdong 518129 (CN)**

(72) Inventors:
• **XU, Rui**
  **Shenzhen, Guangdong 518129 (CN)**
• **CAO, Youlong**
  **Shenzhen, Guangdong 518129 (CN)**
• **PANG, Xu**
  **Shenzhen, Guangdong 518129 (CN)**
• **CHEN, Erkai**
  **Shenzhen, Guangdong 518129 (CN)**
• **QIN, Yi**
  **Shenzhen, Guangdong 518129 (CN)**
• **MI, Xiang**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **INFORMATION TRANSMISSION METHOD AND APPARATUS**

(57)     An information transmission method and an apparatus are provided. The method includes: determining, based on a first parameter, a first resource for transmitting first control information, where the first control information indicates that a physical uplink shared channel resource is to be used or not used in a configured grant period, and the first parameter includes a number of bits of the first control information, or the first parameter includes a number of bits of the first control information and a second resource for transmitting second control information; and transmitting the first control information on the first resource. The second control information includes at least one of first information and channel state information CSI, and the first information includes at least one of hybrid automatic repeat request HARQ and configured grant uplink control information CG-UCI. The resource for transmitting the first control information is determined based on the first parameter, and the first control information is transmitted on the resource, so that reliability of uplink data transmission corresponding to the first control information can be improved.

FIG. 4

## Description

This application claims priority to Chinese Patent Application No. 202310216808.2, filed with the China National Intellectual Property Administration on February 27, 2023 and entitled "INFORMATION TRANSMISSION METHOD AND APPARATUS", and to Chinese Patent Application No. 202310487760.9, filed with the China National Intellectual Property Administration on April 28, 2023 and entitled "INFORMATION TRANSMISSION METHOD AND APPARATUS", both of which are incorporated herein by reference in their entireties.

## TECHNICAL FIELD

This application relates to the communication field, and more specifically, to an information transmission method and an apparatus.

## BACKGROUND

Some multimedia services with strong real-time performance and a large data capacity requirement gradually penetrate into a 5th generation (5th generation, 5G) communication system, for example, video transmission, cloud gaming, and extended reality (extended reality, XR). The XR may include virtual reality (virtual reality, VR) and augmented reality (augmented reality, AR).

When an XR video frame is transmitted in a configured grant (configured grant, CG) period, because a data amount of the XR service frame is large, sizes of video frames vary greatly, and an uplink scheduling resource for transmitting the XR video frame is usually fixed, uplink control information (uplink control information, UCI) is needed to indicate information about uplink transmission. In an existing solution, a rate matching solution of UCI indicating information about uplink transmission of XR data is not considered.

## SUMMARY

This application provides an information transmission method and an apparatus, to improve reliability of uplink data transmission.

According to a first aspect, an information transmission method is provided. The method may be performed by a terminal device, or may be performed by a module (for example, a processor, a chip, or a chip system) used in the terminal device, or may be implemented by a logical node, a logical module, or software that can implement all or some functions of the terminal device. This is not limited herein. For ease of description, an example in which the method is performed by the terminal device is used below for description.

The method includes: determining, based on a first parameter, a first resource for transmitting first control information, where the first control information indicates that a physical uplink shared channel PUSCH resource is to be used or not used in a configured grant CG period, and the first parameter includes a number of bits of the first control information, or the first parameter includes a number of bits of the first control information and a second resource for transmitting second control information; and transmitting the first control information on the first resource. The second control information includes at least one of first information and channel state information CSI, and the first information includes at least one of hybrid automatic repeat request HARQ and configured grant uplink control information CG-UCI.

Based on the foregoing technical solution, the resource for transmitting first control information is determined based on the first parameter, and the first control information is transmitted on the resource, so that reliability of uplink data transmission corresponding to the first control information can be improved. The first parameter includes the number of bits of the first control information, or the first parameter includes the number of bits of the first control information and the second resource for transmitting the second control information.

With reference to the first aspect, in some implementations of the first aspect, a priority index of the first control information is the same as a priority index of the second control information. The first parameter includes the number of bits of the first control information and the second resource; or the first parameter includes the number of bits of the first control information and a number of bits of the first information.

With reference to the first aspect, in some implementations of the first aspect, before determining, based on the first parameter, the first resource for transmitting the first control information, a resource for transmitting the first information is determined based on the number of bits of the first information.

With reference to the first aspect, in some implementations of the first aspect, the resource for transmitting the first information is the first resource, the first resource is determined based on the first parameter, and the first parameter includes the number of bits of the first control information and the number of bits of the first information.

With reference to the first aspect, in some implementations of the first aspect, a resource for transmitting the CSI is determined based on the first resource, where the first resource is determined based on the first parameter, and the first parameter includes the number of bits of the first control information and the number of bits of the first information; or a resource for transmitting the CSI is determined based on the first resource and the resource for transmitting the first information, where the first resource is determined based on the first parameter, and the first parameter includes the number of bits of the first control information and the resource for transmitting the first information.

With reference to the first aspect, in some implementations of the first aspect, the second control information includes the first information and the CSI, a priority index of the first control information is greater than a priority index of the second control information, and the first parameter includes the number of bits of the first control information.

With reference to the first aspect, in some implementations of the first aspect, after determining, based on the first parameter, the first resource for transmitting the first control information, a resource for transmitting the first information is determined based on the first resource.

With reference to the first aspect, in some implementations of the first aspect, a resource for transmitting the CSI is determined based on the first resource and the resource for transmitting the first information.

With reference to the first aspect, in some implementations of the first aspect, a priority index of the first control information is greater than a priority index of the first information, and the priority index of the first control information is the same as a priority index of the CSI; and the first parameter includes the number of bits of the first control information; or the first parameter includes the number of bits of the first control information and a resource for transmitting the CSI.

With reference to the first aspect, in some implementations of the first aspect, after determining, based on the first parameter, the first resource for transmitting the first control information, a resource for transmitting the first information is determined based on the first resource, where the first resource is determined based on the first parameter, and the first parameter includes the number of bits of the first control information; or a resource for transmitting the first information is determined based on the first resource and the resource for transmitting the CSI, where the first resource is determined based on the first parameter, and the first parameter includes the number of bits of the first control information and the resource for transmitting the CSI.

With reference to the first aspect, in some implementations of the first aspect, the resource for transmitting the CSI is determined based on the first resource, where the first resource is determined based on the first parameter, and the first parameter includes the number of bits of the first control information; or the resource for transmitting the CSI is determined, based on a number of bits of the CSI.

With reference to the first aspect, in some implementations of the first aspect, a priority index of the first information is greater than a priority index of the first control information, and the priority index of the first control information is the same as a priority index of the CSI; and the first parameter includes the number of bits of the first control information and a resource for transmitting the first information; or the first parameter includes the number of bits of the first control information, a resource for transmitting the first information, and a resource for transmitting the CSI.

With reference to the first aspect, in some implementations of the first aspect, before determining, based on the first parameter, the first resource for transmitting the first control information, the resource for transmitting the first information is determined based on a number of bits of the first information.

With reference to the first aspect, in some implementations of the first aspect, the resource for transmitting the CSI is determined based on the first resource and the resource for transmitting the first information, where the first resource is determined based on the first parameter, and the first parameter includes the number of bits of the first control information and the resource for transmitting the first information; or the resource for transmitting the CSI is determined based on the resource for transmitting the first information.

With reference to the first aspect, in some implementations of the first aspect, a priority index of the first information is greater than a priority index of the first control information, the priority index of the first information is the same as a priority index of the CSI, and the first parameter includes a resource for transmitting the CSI and a resource for transmitting the first information.

With reference to the first aspect, in some implementations of the first aspect, before determining, based on the first parameter, the first resource for transmitting the first control information, the resource for transmitting the first information is determined based on a number of bits of the first information.

With reference to the first aspect, in some implementations of the first aspect, the resource for transmitting the CSI is determined based on the resource for transmitting the first information.

With reference to the first aspect, in some implementations of the first aspect, a priority index of the first information is the same as a priority index of the first control information, and the priority index of the first information is greater than a priority index of the CSI; and the first parameter includes a resource for transmitting the first information; or the first parameter includes a number of bits of the first information and the number of bits of the first control information.

With reference to the first aspect, in some implementations of the first aspect, before determining, based on the first parameter, the first resource for transmitting the first control information, the resource for transmitting the first information is determined based on the number of bits of the first information.

With reference to the first aspect, in some implementations of the first aspect, the resource for transmitting the first information is the first resource, the first resource is determined based on the first parameter, and the first parameter includes the number of bits of the first control information and the number of bits of the first information.

With reference to the first aspect, in some implementations of the first aspect, a resource for transmitting the CSI is determined based on the first resource, where the first resource is determined based on the first parameter, and the first parameter includes the number of bits of the first control information and the number of bits of the first information; or a resource for transmitting the CSI is determined based on the first resource and the resource for transmitting the first information, where the first resource is determined based on the first parameter, and the first parameter includes the number of bits of the first control information.

With reference to the first aspect, in some implementations of the first aspect, a priority index of the first information is the same as a priority index of the first control information, and a priority index of the CSI is greater than the priority index of the first information; and the first parameter includes a resource for transmitting the CSI and a resource for transmitting the first information; or the first parameter includes a resource for transmitting the CSI, a number of bits of the first information, and the number of bits of the first control information.

With reference to the first aspect, in some implementations of the first aspect, before determining, based on the first parameter, the first resource for transmitting the first control information, the resource for transmitting the CSI is determined based on a number of bits of the CSI.

With reference to the first aspect, in some implementations of the first aspect, the resource for transmitting the first information is determined based on the resource for transmitting the CSI; or the resource for transmitting the first information is determined based on the resource for transmitting the CSI and the first parameter, where the first parameter includes the number of bits of the first information and the number of bits of the first control information.

With reference to the first aspect, in some implementations of the first aspect, the method further includes: receiving indication information from a network device, where the indication information indicates the number of bits of the first control information.

With reference to the first aspect, in some implementations of the first aspect, the first resource is further related to a first offset, and the first offset is configured by using radio resource control RRC layer signaling, or is indicated by a media access control control element MAC CE or downlink control information DCI.

According to a second aspect, an information transmission apparatus is provided. The apparatus includes a processing unit and a transceiver unit. The processing unit is configured to determine, based on a first parameter, a first resource for transmitting first control information, where the first control information indicates that a physical uplink shared channel PUSCH resource is to be used or not used in a configured grant CG period, and the first parameter includes a number of bits of the first control information, or the first parameter includes a number of bits of the first control information and a second resource for transmitting second control information. The transceiver unit is configured to transmit the first control information on the first resource. The second control information includes at least one of first information and channel state information CSI, and the first information includes at least one of hybrid automatic repeat request HARQ and configured grant uplink control information CG-UCI.

With reference to the second aspect, in some implementations of the second aspect, a priority index of the first control information is the same as a priority index of the second control information. The first parameter includes the number of bits of the first control information and the second resource; or the first parameter includes the number of bits of the first control information and a number of bits of the first information.

With reference to the second aspect, in some implementations of the second aspect, before determining, based on the first parameter, the first resource for transmitting the first control information, the processing unit is further configured to determine, based on the number of bits of the first information, a resource for transmitting the first information.

With reference to the second aspect, in some implementations of the second aspect, the resource for transmitting the first information is the first resource, the first resource is determined based on the first parameter, and the first parameter includes the number of bits of the first control information and the number of bits of the first information.

With reference to the second aspect, in some implementations of the second aspect, the processing unit is further configured to determine, based on the first resource, a resource for transmitting the CSI, where the first resource is determined based on the first parameter, and the first parameter includes the number of bits of the first control information and the number of bits of the first information; or the processing unit is further configured to determine, based on the first resource and the resource for transmitting the first information, a resource for transmitting the CSI, where the first resource is determined based on the first parameter, and the first parameter includes the number of bits of the first control information and the resource for transmitting the first information.

With reference to the second aspect, in some implementations of the second aspect, the second control information includes the first information and the CSI, a priority index of the first control information is greater than a priority index of the second control information, and the first parameter includes the number of bits of the first control information.

With reference to the second aspect, in some implementations of the second aspect, after determining, based on the first parameter, the first resource for transmitting the first control information, the processing unit is further configured to determine, based on the first resource, a resource for transmitting the first information.

With reference to the second aspect, in some implementations of the second aspect, the processing unit is further configured to determine, based on the first resource and the resource for transmitting the first information, a resource for transmitting the CSI.

With reference to the second aspect, in some implementations of the second aspect, a priority index of the first control information is greater than a priority index of the first information, and the priority index of the first control information is the same as a priority index of the CSI; and the first parameter includes the number of bits of the first control information; or the first parameter includes the number of bits of the first control information and a resource for transmitting the CSI.

With reference to the second aspect, in some implementations of the second aspect, after determining, based on the first parameter, the first resource for transmitting the first control information, the processing unit is further configured to determine, based on the first resource, a resource for transmitting the first information, where the first resource is determined based on the first parameter, and the first parameter includes the number of bits of the first control information; or the processing unit is further configured to determine, based on the first resource and the resource for transmitting the CSI, a resource for transmitting the first information, where the first resource is determined based on the first parameter, and the first parameter includes the number of bits of the first control information and the resource for transmitting the CSI.

With reference to the second aspect, in some implementations of the second aspect, the processing unit is further configured to determine, based on the first resource, the resource for transmitting the CSI, where the first resource is determined based on the first parameter, and the first parameter includes the number of bits of the first control information; or the processing unit is further configured to determine, based on a number of bits of the CSI, the resource for transmitting the CSI.

With reference to the second aspect, in some implementations of the second aspect, a priority index of the first information is greater than a priority index of the first control information, and the priority index of the first control information is the same as a priority index of the CSI; and the first parameter includes the number of bits of the first control information and a resource for transmitting the first information; or the first parameter includes the number of bits of the first control information, a resource for transmitting the first information, and a resource for transmitting the CSI.

With reference to the second aspect, in some implementations of the second aspect, before determining, based on the first parameter, the first resource for transmitting the first control information, the processing unit is further configured to determine, based on a number of bits of the first information, the resource for transmitting the first information.

With reference to the second aspect, in some implementations of the second aspect, the processing unit is further configured to determine, based on the first resource and the resource for transmitting the first information, the resource for transmitting the CSI, where the first resource is determined based on the first parameter, and the first parameter includes the number of bits of the first control information and the resource for transmitting the first information; or the processing unit is further configured to determine, based on the resource for transmitting the first information, the resource for transmitting the CSI.

With reference to the second aspect, in some implementations of the second aspect, a priority index of the first information is greater than a priority index of the first control information, the priority index of the first information is the same as a priority index of the CSI, and the first parameter includes a resource for transmitting the CSI and a resource for transmitting the first information.

With reference to the second aspect, in some implementations of the second aspect, before determining, based on the first parameter, the first resource for transmitting the first control information, the processing unit is further configured to determine, based on a number of bits of the first information, the resource for transmitting the first information.

With reference to the second aspect, in some implementations of the second aspect, the processing unit is further configured to determine, based on the resource for transmitting the first information, the resource for transmitting the CSI.

With reference to the second aspect, in some implementations of the second aspect, a priority index of the first information is the same as a priority index of the first control information, and the priority index of the first information is greater than a priority index of the CSI; and the first parameter includes a resource for transmitting the first information; or the first parameter includes a number of bits of the first information and the number of bits of the first control information.

With reference to the second aspect, in some implementations of the second aspect, before determining, based on the first parameter, the first resource for transmitting the first control information, the processing unit is further configured to determine, based on the number of bits of the first information, the resource for transmitting the first information.

With reference to the second aspect, in some implementations of the second aspect, the resource for transmitting the first information is the first resource, the first resource is determined based on the first parameter, and the first parameter includes the number of bits of the first control information and the number of bits of the first information.

With reference to the second aspect, in some implementations of the second aspect, the processing unit is further configured to determine, based on the first resource, a resource for transmitting the CSI, where the first resource is determined based on the first parameter, and the first parameter includes the number of bits of the first control information and the number of bits of the first information; or the processing unit is further configured to determine, based on the first resource and the resource for transmitting the first information, a resource for transmitting the CSI, where the first resource is determined based on the first parameter, and the first parameter includes the number of bits of the first control information.

With reference to the second aspect, in some implementations of the second aspect, a priority index of the first information is the same as a priority index of the first control information, and a priority index of the CSI is greater than the priority index of the first information; and the first parameter includes a resource for transmitting the CSI and a resource for transmitting the first information; or the first parameter includes a resource for transmitting the CSI, a number of bits of the first information, and the number of bits of the first control information.

With reference to the second aspect, in some implementations of the second aspect, before determining, based on the first parameter, the first resource for transmitting the first control information, the processing unit is further configured to determine, based on a number of bits of the CSI, the resource for transmitting the CSI.

With reference to the second aspect, in some implementations of the second aspect, the processing unit is further configured to determine, based on the resource for transmitting the CSI, the resource for transmitting the first information; or the processing unit is further configured to determine, based on the resource for transmitting the CSI and the first parameter, the resource for transmitting the first information, where the first parameter includes the number of bits of the first information and the number of bits of the first control information.

With reference to the second aspect, in some implementations of the second aspect, the transceiver unit is further configured to receive indication information from a network device, where the indication information indicates the number of bits of the first control information.

With reference to the second aspect, in some implementations of the second aspect, the first resource is further related to a first offset, and the first offset is configured by using radio resource control RRC layer signaling, or is indicated by a media access control control element MAC CE or downlink control information DCI.

According to a third aspect, an information transmission apparatus is provided. The apparatus may be a terminal device, or may be a component (for example, a processor, a chip, or a chip system) of a terminal device, or may be a logical node, logical module, or software that can implement all or some functions of a network device. The apparatus has a function of implementing the first aspect and the possible implementations of the first aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit, and the processing unit may be a processor. Optionally, the apparatus further includes a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit or instructions from another source, to enable the apparatus to perform the communication method in the first aspect and the possible implementations of the first aspect. In this design, the apparatus may be a terminal device.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, to enable a chip in a network device to perform the communication method in any one of the first aspect and the possible implementations of the first aspect. Optionally, the processing unit may execute instructions in a storage unit, and the storage unit may be a storage module, for example, a register or a cache, in the chip. The storage unit may alternatively be located inside the communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits for controlling program execution of the communication method in the first aspect.

According to a fourth aspect, a communication system is provided. The communication system includes the communication apparatus provided in any one of the second aspect or the implementations of the second aspect. The communication system may complete the information transmission method provided in any one of the possible implementations of the first aspect.

According to a fifth aspect, a computer-readable storage medium is provided. The computer-readable storage medium stores a computer program, and when the computer program is run on a computer, the computer is enabled to perform the instructions of the method in any one of the possible implementations of the first aspect.

According to a sixth aspect, a chip is provided, including a processing unit. The processing unit may execute instructions, to enable the method in any one of the possible implementations of the first aspect to be performed.

According to a seventh aspect, a computer program product is provided. The product includes computer program code, and when the computer program code is run, the instructions of the method in any one of the possible implementations of the first aspect is executed.

According to an eighth aspect, a chip system is provided, including a memory and a processor. The memory is configured to store instructions, and the processor is configured to invoke the instructions from the memory and run the instructions, to enable the method in the first aspect and the possible implementations of the first aspect to be performed.

The chip system may include an input circuit or interface for sending information or data, and an output circuit or interface for receiving information or data.

## BRIEF DESCRIPTION OF DRAWINGS

FIG. 1 is a diagram of a possible system applicable to an embodiment of this application;
FIG. 2 is a diagram of arrival of an XR video frame;
FIG. 3 is a diagram of an uplink configured scheduling process;
FIG. 4 is a schematic flowchart of an information transmission method according to an embodiment of this application;
FIG. 5 is a block diagram of an example of a communication apparatus according to this application;
FIG. 6 is another block diagram of an example of a communication apparatus according to this application; and
FIG. 7 is another block diagram of an example of a communication apparatus according to this application.

## DESCRIPTION OF EMBODIMENTS

The following describes technical solutions of this application with reference to the accompanying drawings.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a $5^{th}$ generation ($5^{th}$ generation, 5G) system or a evolved communication system such as new radio (new radio, NR), vehicle-to-everything (vehicle-to-X V2X), where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like, long term evolution-vehicle (long term evolution-vehicle, LTE-V), an internet of vehicles, machine type communication (machine type communication, MTC), an internet of things (internet of things, IoT), long term evolution-machine (long term evolution-machine, LTE-M), machine to machine (machine to machine, M2M), device to device (device to device, D2D), and the like.

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a vehicle-mounted communication unit (telematics box, T-box), a chip, a system on chip (system on chip, SoC), or the like. The chip or the SoC may be installed in a vehicle, an OBU, an RSU, or a T-box.

The terminal device in embodiments of this application may further include at least any one of a user equipment, an augmented reality (augmented reality, AR)/a virtual reality (virtual reality, VR)/an extended reality (extended reality, XR) device, a wearable device, a smart home appliance terminal, a terminal device and a communication module of the terminal device, a mobile phone and a communication module of the mobile phone, a vehicle and a communication module of the vehicle, an information processing device, a display device, a network apparatus, a base station, a TRP, customer premise equipment (customer premise equipment, CPE), a router, a network access device, and the like. In terms of Uu (UTRAN-to-terminal device) air interface transmission, both parties of wireless communication include a network apparatus and a user communication device. In terms of SL air interface transmission, a receiving end and a transmitting end of wireless communication are both user communication devices. The network apparatus may be a conventional macro base station eNB in a conventional UMTS/LTE wireless communication system, may be a micro base station eNB in a heterogeneous network (heterogeneous network, HetNet) scenario, may be a baseband processing unit (baseband unit, BBU) and a remote radio unit (remote radio unit, RRU) in a distributed base station scenario, may be a baseband pool BBU pool and a radio frequency unit RRU in a CRAN scenario, or may be a gNB in a wireless communication system.

In embodiments of this application, the network device may be any device with a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system, may be 5G, for example, NR, a gNB in a system, or a transmission point (TRP or TP), or one antenna panel or one group of antenna panels (including a plurality of antenna panels) of a base station in a 5G system, or may be a network node that forms a gNB or a transmission point, for example, a baseband unit (BBU), a distributed unit (distributed unit, DU), or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of radio resource control (radio resource control, RRC) and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and the terminal device communicates with the cell by using a transmission resource (for example, a frequency domain resource or a spectrum resource) assigned by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

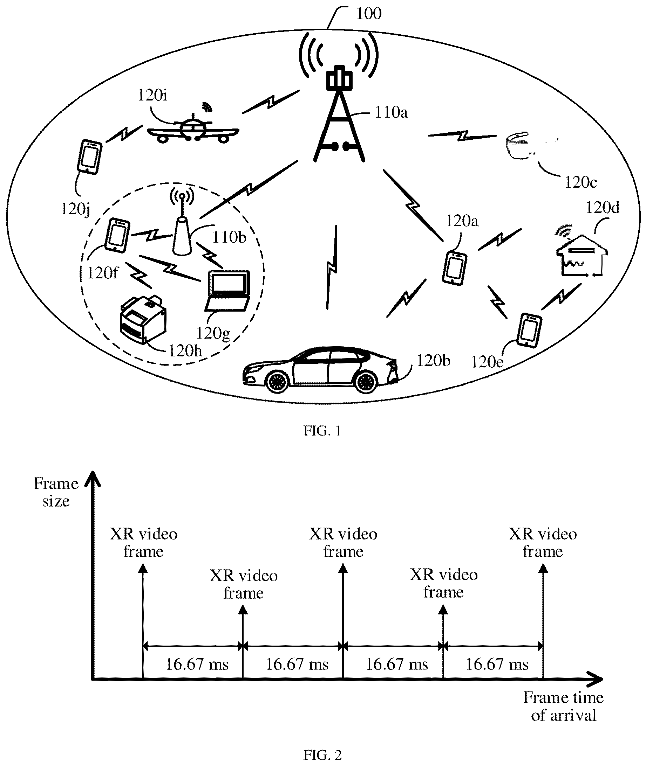

FIG. 1 is a diagram of a possible non-limiting system applicable to an embodiment of this application.

As shown in FIG. 1, the communication system includes a radio access network (radio access network, RAN) 100. The RAN 100 includes at least one RAN node (for example, a 110a and a 110b in FIG. 1, which are collectively referred to as 110) and at least one terminal device (for example, a 120a to a 120j in FIG. 1, which are collectively referred to as 120). The RAN 100 may further include another RAN node, for example, a wireless relay device and/or a wireless backhaul device (not shown in FIG. 1). A terminal 120 is connected to a RAN node 110 in a wireless manner. The RAN node 110 is connected to a core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be sometimes referred to as an access network device, a network device, a RAN entity, an access node, or the like, and forms a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Both the RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G)

mobile communication system, a base station in a future mobile communication system, an access node in a Wi-Fi system, or the like. The RAN node may be a macro base station (for example, the 110a in FIG. 1), a micro base station or an indoor station (for example, the 110b in FIG. 1), a relay node or a donor node, or a radio controller in a CRAN scenario. Optionally, the RAN node may be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may also be implemented by using a software function running on hardware, or may be implemented by using an instantiated virtualization function on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented by using a software module, a hardware module, or a combination of a software module and a hardware module.

The RAN node may be further described differently. Unless otherwise specified, in this application, the RAN node is described by using a network device.

It should be understood that FIG. 1 is merely a diagram, and the communication system may further include another device that is not shown. In addition, a quantity of terminal devices and a quantity of network devices included in the communication system are not limited in embodiments of this application.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, an Android operating system, an iOS operating system, or a Windows operating system. The application layer may include applications such as a browser, an address book, word processing software, and instant messaging software. In addition, this application does not limit a specific structure of an execution body of the method provided in this application, provided that code of the method provided in this application can be recorded and run, to perform communication according to the method provided in this application. For example, the execution body of the method provided in this application may be a terminal device or a network device, or may be a functional module that is in the terminal device or the network device and that can invoke and execute a program.

In this application, "sending information to... (a terminal)" may be understood as that a destination end of the information is the terminal, and may include directly or indirectly sending information to the terminal. "Receiving information from... (a terminal)" may be understood as that a source end of the information is the terminal, and may include directly or indirectly receiving information from the terminal. Information may undergo necessary processing between the source end and the destination end, for example, a format change. However, the destination end may understand valid information from the source end. Similar descriptions in this application may be understood similarly, and details are not described herein.

For ease of understanding embodiments of this application, concepts used in embodiments of this application are briefly introduced.

It should be understood that related terms and descriptions below are applicable to all embodiments in this specification. Different embodiments may be used independently, or may be used in combination based on some internal or external relationships. Different implementations in embodiments may be used independently or in combination.

1. Extended reality XR service

Extended reality XR may include virtual reality VR and augmented reality AR.

The VR integrates a plurality of technologies such as computer graphics and multimedia, to simulate functions of human sensory organs, for example, a visual sense, an auditory sense, and a tactile sense. In this way, people immerse in a virtual world generated by a computer, feeling as if they are there, and can perform real-time communication by using a language, a gesture, and the like. This enhances an immersion sense. By using a VR technology, people feel reality of the real world, and can further break through restrictions of conditions such as time and space, to have wonderful experience of entering the virtual world.

In the AR, by using a computer technology, virtual information is superimposed to the real world, is displayed through devices such as a mobile phone, a tablet computer, and glasses, and is perceived by people, to achieve integration of the real world and the virtual world, and enrich the real world. In short, more information is given to a real object, to enhance a stereoscopic sense, and enhance a visual effect and interactive experience.

Cloud virtual reality (cloud VR) and cloud augmented reality (cloud AR) introduce cloud computing and cloud rendering concepts and technologies to VR/AR service applications. With high-speed and stable networks, a display output and an audio output on a cloud are encoded, compressed, and then transmitted to UE. In this way, VR/AR service content is migrated to the cloud and rendered to the cloud. A VR/AR terminal device can also meet a requirement of lightweight and mobility. As shown in FIG. 1, in an architecture of a cloud VR/AR communication network, the VR/AR terminal device is connected to a network via a network device or another access point, and obtains a VR/AR service from the cloud.

FIG. 2 is a diagram of arrival of an XR video frame. Service models of an XR transmission service and a video transmission service are usually periodic arrival based on a frame rate. FIG. 2 shows a video with a frame rate of 60 frames per second (frame per second, FPS). Ideally, a picture frame arrives at an interval of 16.67 ms. It can be learned that data amounts of the XR transmission service and the video transmission service are usually large. For example, a size of a 4K video frame is about 30 KB to 100 KB. In addition, sizes of video frames usually vary. Because compression rates and frame types of the video frames are different, the sizes of the video frames vary greatly.

Different XR services usually have different uplink and downlink service models. A display change of scene content in VR is caused by a posture or a position (an action). Position information and posture information are mainly uploaded in the VR, and have a small data amount that is usually only dozens of kbps. In this case, downlink transmission is performed mainly on a rendered video stream with a large data amount that may reach dozens of to hundreds of Mbps. Different from that in the VR, a display change of scene content in the AR is caused by a change of a fixation focus target and a change of a spatial relationship (an action) between a position and a fixation point. Visual information (including a depth) needed for perception is uploaded in the AR. In this case, uplink transmission is performed mainly on a clear and stable picture or video stream with a large data amount. Based on research and evaluation, for an interactive AR service, a network uplink rate is required to be approximately 2 Mbps to meet initial experience and 10 Mbps to 20 Mbps to meet advanced experience. Compared with Cloud VR, Cloud AR has a higher requirement on an uplink transmission rate and has more challenging uplink transmission.

2. Uplink transmission configuration

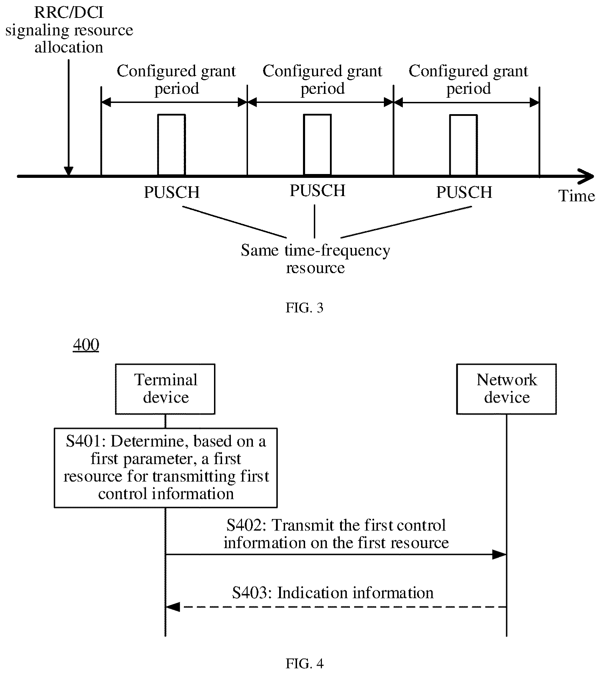

FIG. 3 is a diagram of an uplink configured scheduling process. Uplink configured scheduling (configured scheduling, CS) or a configured grant (configured grant, CG) is suitable for uplink periodic service transmission. As shown in FIG. 3, the CG means that in an uplink transmission process, for an uplink scheduling resource, a physical uplink shared channel (physical uplink shared channel, PUSCH) resource needs to be allocated only once via radio resource control (radio resource control, RRC) signaling or downlink control information (downlink control information, DCI), and then the same time-frequency resource may be periodically used for uplink transmission. Each period may be referred to as a CG period.

3. Rate matching (rate matching)

A data block before encoding may be referred to as a transport block (transport block, TB). Because a TB has a large number of bits, a transmitting end usually splits one TB into a plurality of code blocks (code blocks, CBs), and encoding is separately performed on each CB. Because a physical resource for transmitting a code block may be inconsistent with a physical time-frequency resource of a to-be-transmitted code block, bit retransmission or puncturing needs to be performed on the to-be-transmitted code block, to match a bearing capability of the physical time-frequency resource. This process is referred to as rate matching. After rate matching is performed on a plurality of encoded CBs, processing such as interleaving and concatenation needs to be performed, to obtain one physical data block (codeword), and transmit the physical data block to a receiving end.

When an XR video frame is transmitted in a CG period, because a data amount of the XR service frame is large, sizes of video frames vary greatly, and an uplink scheduling resource for transmitting the XR video frame is usually fixed, uplink control information (uplink control information, UCI) is needed to indicate information about uplink transmission, where for example, the information about the uplink transmission includes an unused CG PUSCH resource. In an existing solution, a rate matching solution of the UCI indicating the information about the uplink transmission of XR data is not considered. In the following description, the UCI that indicates the information about the uplink transmission of the XR data is referred to as XR UCI.

In view of this, this application provides a schematic flowchart of an information transmission method, to ensure reliability of XR service data transmission.

It may be understood that in the method diagram in this application, an example in which a network device and a terminal device are execution bodies of interaction illustration is used to illustrate the method. However, the execution bodies of the interaction illustration are not limited in this application. For example, the network device in the figure may alternatively be a module (for example, a chip, a chip system, or a processor) used in the network device, or may be a logical node, a logical module, or software that can implement all or some functions of the network device. The terminal device in the figure may alternatively be a module (for example, a chip, a chip system, or a processor) used in the terminal device, or may be a logical node, a logical module, or software that can implement all or some functions of the terminal device.

FIG. 4 is a schematic flowchart of an information transmission method according to an embodiment of this application. The method includes at least the following steps.

S401: A terminal device determines, based on a first parameter, a first resource for transmitting first control information.

The first control information may indicate that a physical uplink shared channel (physical uplink shared channel, PUSCH) resource is to be used or not used in a configured grant CG period. For example, the first control information may indicate that a CG transmission occasion (occasion) is to be used or not used in the CG period. The CG period may refer to a CG period or a first time segment, where the first time segment is a time segment shorter than the CG period in the CG period.

For example, the first control information may indicate that a CG transmission occasion is to be used or not used for data of an XR service in the CG period. When the first control information indicates that the CG transmission occasion is to be used or not used for the data of the XR service in the CG period, the first control information may be referred to as XR-UCI (an example of the first control information).

It should be understood that the XR service is merely an example, and the first control information may further indicate that a CG transmission occasion is to be used or not used for data of another service in the CG period. This is not limited in this application.

The first parameter may include a number of bits of the first control information, or the first parameter includes a number of bits of the first control information and a second resource for transmitting second control information.

The second control information may include at least one of first information and channel state information (channel state information, CSI). The first information may include at least one of hybrid automatic repeat request (hybrid automatic repeat request, HARQ) and configured grant uplink control information (configured grant uplink control information, CG-UCI). That the first information includes at least one of HARQ feedback information and the CG-UCI may be understood as follows: The HARQ feedback information (for example, a HARQ-ACK) is transmitted on a PUSCH and there is no CG-UCI; or HARQ-ACK and the CG-UCI are jointly encoded and transmitted on a same PUSCH; or the CG-UCI is transmitted on the PUSCH and there is no HARQ-ACK.

Specifically, the terminal device may determine the first resource based on a priority index (priority index) of the second control information, a priority index of the first control information, and the first parameter. The priority index may indicate a first priority of control information. For example, the first priority is a priority of a service corresponding to the control information. A first priority of the CSI may also be understood as a first priority of an associated CG PUSCH.

For example, for PUSCH transmission in which the HARQ feedback information is carried, the terminal device may obtain a value of a priority index from a higher-layer configuration parameter harq-CodebookID. For PUSCH transmission in which the CSI is carried, the terminal device may obtain a value of a priority index from a priority indication field in DCI for activating CSI reporting.

For example, when the value of the priority index of the control information is 1, it may indicate that the control information is of a high priority, or the first priority of the control information is high, or a service corresponding to the control information is a high-priority service. When the value of the priority index of the control information is 0, it may indicate that the control information is of a low priority, or the first priority of the control information is low, or a service corresponding to the control information is a low-priority service.

The following describes a specific manner in which the terminal device determines the first resource based on two cases in which a first priority of the first control information is the same as or different from a first priority of the second control information (which may be indicated by the priority indexes).

**Case 1: The priority index of the first control information is the same as the priority index of the second control information.**

In this case, the terminal device may determine, based on a second priority of control information, a resource for transmitting the control information (including the first control information and the second control information). Control information with a higher second priority may be preferentially transmitted. In other words, the terminal device may preferentially determine a resource for transmitting the control information with the higher second priority. That the first resource is determined based on different rankings of second priorities of the XR-UCI, the first information, and the CSI may include the following four examples.

**Example #1: HARQ-ACK (CG-UCI) > XR-UCI > CSI part 1 > CSI part 2**

The CSI part 1 and the CSI part 2 are two parts of the CSI. For details, refer to existing related descriptions. The HARQ-ACK (CG-UCI) is an example of the first information.

In this example, the terminal device preferentially determines a resource for transmitting the HARQ-ACK (CG-UCI); and after determining the resource for transmitting the HARQ-ACK (CG-UCI), the terminal device determines a resource (an example of the first resource) for transmitting the XR-UCI. The resource for transmitting the XR-UCI is related to a number of bits of the XR-UCI and the resource for transmitting the HARQ-ACK (CG-UCI). In other words, the first parameter includes the number of bits of the XR-UCI and the resource for transmitting the HARQ-ACK (CG-UCI).

A specific manner in which the terminal device determines the resource for transmitting the HARQ-ACK (CG-UCI) is shown in any one of Formulas (1) to (4).

Formula (1) is applicable to a case in which the HARQ-ACK (CG-UCI) is transmitted on the PUSCH, repeated transmission Type B is not used, and processing over multi-slot (TB processing over multi-slot, TBoMS) is not configured or TBoMS is configured but a value of a number of slots of the TB transmission over multi-slot (numberOfSlotsTBoMS) is 1.

$$Q'_{ACK/CG-UCI} = \min\left\{ \left\lceil \frac{\left(O_{ACK} + O_{CG-UCI} + L_{ACK(CG-UCI)}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\} \quad (1)$$

$Q'_{ACK/CG-UCI}$ indicates a quantity of determined resources for transmitting the HARQ-ACK (CG-UCI) (an example of a resource for transmitting the first information). If only the HARQ-ACK is present and no CG-UCI is present on the PUSCH, $Q'_{ACK/CG-UCI}$ is a quantity $Q'_{ACK}$ of resources for transmitting the HARQ-ACK. If only the CG-UCI is present and no HARQ-ACK is present on the PUSCH, $Q'_{ACK/CG-UCI}$ is a quantity $Q'_{CG-UCI}$ of resources for transmitting the CG-UCI. If the HARQ-ACK and the CG-UCI are present on the PUSCH, $Q'_{ACK/CG-UCI}$ is a quantity of resources for transmitting the HARQ-ACK and the CG-UCI. A quantity of resources for transmitting control information may be a quantity of coding and modulation symbols. The quantity of resources for transmitting the HARQ-ACK and the CG-UCI may be a quantity of coding and modulation symbols when the HARQ-ACK and the CG-UCI are jointly encoded. Descriptions of a same or similar case are omitted below.

$O_{ACK} + O_{CG-UCI}$ represents a number of bits of the HARQ-ACK (CG-UCI) (an example of a number of bits of the first information). If only the HARQ-ACK is present and no CG-UCI is present on the PUSCH, $O_{ACK} + O_{CG-UCI} = O_{ACK}$. If only the CG-UCI is present and no HARQ-ACK is present on the PUSCH, $O_{ACK} + O_{CG-UCI} = O_{CG-UCI}$. Descriptions of a same or similar case are omitted below.

$L_{ACK(CG-UCI)}$ represents a number of check bits of a cyclic redundancy check (cyclic redundancy check, CRC) on the HARQ-ACK (CG-UCI), and if $O_{ACK}/O_{ACK} + O_{CG-UCI} \geq 360$, $L_{ACK} = 11$; otherwise, calculation is performed by using a coding rule of a polar code. $\beta_{offset}^{PUSCH}$ represents an offset, and $\beta_{offset}^{PUSCH} = \beta_{offset}^{ACK(CG-UCI)}$, where the offset is used to adjust a quantity of resources occupied by the HARQ-ACK (CG-UCI), for example, a quantity of resource elements (resource elements, REs). If the HARQ-ACK is present on the PUSCH (which includes that the HARQ-ACK is present on the PUSCH, and that the HARQ-ACK and the CG-UCI are present on the PUSCH), $\beta_{offset}^{ACK(CG-UCI/XR-UCI)} = \beta_{offset}^{ACK}$. Descriptions of a same or similar case are omitted below. $N_{symb,all}^{PUSCH}$ represents a total quantity of symbols occupied by the PUSCH in a time unit. $M_{sc}^{UCI}(l)$ represents a quantity of resources occupied by the control information on an $l$th symbol in the time unit. If a demodulation reference signal (demodulation reference signal, DMRS) is present on the current symbol, $M_{sc}^{UCI}(l) = 0$. If no DMRS is present on the current symbol, $M_{sc}^{UCI}(l) = M_{sc}^{PUSCH}(l) - M_{sc}^{PT-RS}(l)$.

$M_{sc}^{PUSCH}(l)$ represents a scheduling bandwidth of PUSCH transmission, and $M_{sc}^{PT-RS}(l)$ represents a quantity of resources that can be occupied for a phase tracking reference signal (phase tracking reference signal, PT-RS) on the $l^{th}$ symbol.

$c_{UL-SCH}$ represents a quantity of code blocks of data transmitted on the PUSCH.

$K_r$ represents a number of bits of an $r^{th}$ code block transmitted on the PUSCH.

$\alpha$ represents a scaling factor.

$l_0$ indicates a 1$^{st}$ symbol after the DMRS, and $\lceil \ \rceil$ indicates rounding up.

Formula (2) is applicable to a case in which the HARQ-ACK (CG-UCI) is transmitted on the PUSCH, the repeated transmission Type B is not used, and the TBoMS is configured but the value of numberOfSlotsTBoMS is $N_s$, where $N_s$ is greater than 1.

$$Q'_{ACK/CG-UCI} = \min\left\{ \left\lceil \frac{\left(O_{ACK} + O_{CG-UCI} + L_{ACK(CG-UCI)}\right) \cdot \beta_{offset}^{PUSCH} \cdot \sum_{l=0}^{N_{symb,all}^{PUSCH}-1} M_{sc}^{UCI}(l)}{\frac{1}{N_s}\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\} \quad (2)$$

Formula (3) is applicable to a case in which the HARQ-ACK (CG-UCI) is transmitted on the PUSCH, and the repeated transmission Type B is used (the repeated transmission Type B and TBoMS are not both configured in the protocol by default).

$$Q'_{ACK/CG-UCI} = \min\left\{ \left\lceil \frac{\left(O_{ACK} + O_{CG-UCI} + L_{ACK(CG-UCI)}\right) \cdot \beta_{offset}^{PUSCH} \cdot \sum_{l=0}^{N_{symb,nominal}^{PUSCH}-1} M_{sc,\ nominal}^{UCI}(l)}{\sum_{r=0}^{C_{UL-SCH}-1} K_r} \right\rceil, \right.$$

$$\left. \left\lceil \alpha \cdot \sum_{l=l_0}^{N_{symb,nominal}^{PUSCH}-1} M_{sc,nominal}^{UCI}(l) \right\rceil, \alpha \cdot \sum_{l=l_0}^{N_{symb,actual}^{PUSCH}-1} M_{sc,actual}^{UCI}(l) \right\} \quad (3)$$

Formula (4) is applicable to a case in which the HARQ-ACK (CG-UCI) is transmitted on the PUSCH, and there is no uplink shared channel (uplink shared channel, UL-SCH) data.

$$Q'_{ACK/CG-UCI} = \min\left\{ \left\lceil \frac{\left(O_{ACK} + O_{CG-UCI} + L_{ACK(CG-UCI)}\right) \cdot \beta_{offset}^{PUSCH}}{R \cdot Q_m} \right\rceil, \left\lceil \alpha \cdot \sum_{l=l_0}^{N_{symb,nominal}^{PUSCH}-1} M_{sc,nominal}^{UCI}(l) \right\rceil \right\} \quad (4)$$

$R$ represents a code rate, and $Q_m$ represents a modulation order.

After determining the resource for transmitting the HARQ-ACK (CG-UCI), the terminal device determines the first resource. The first resource is related to the resource for transmitting the HARQ-ACK (CG-UCI), or the first parameter includes the resource for transmitting the HARQ-ACK (CG-UCI). A manner of determining the first resource is shown in Formulas (5) and (6).

Formula (5) is applicable to a case in which the XR-UCI is transmitted on the PUSCH, the repeated transmission Type B is not used, and the TBoMS is not configured or the TBoMS is configured but the value of numberOfSlotsTBoMS is 1.

$$Q'_{XR-UCI} = \min\left\{ \left\lceil \frac{\left(O_{XR-UCI} + L_{XR-UCI}\right) \cdot \beta_{offset}^{PUSCH} \cdot \sum_{l=0}^{N_{symb.all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb.all}^{PUSCH}-1} M_{sc}^{UCI}(l) - Q'_{ACK/CG-UCI} \right\rceil \right\} \quad (5)$$

$Q'_{XR-UCI}$ represents the resource (an example of the first resource) for transmitting the XR-UCI. $Q'_{ACK/CG-UCI}$ represents the resource for transmitting the HARQ-ACK (CG-UCI).

$O_{XR-UCI}$ represents the number of bits of the XR-UCI (an example of the number of bits of the first control information).

$L_{XR-UCI}$ indicates a number of check bits of CRC on the XR-UCI. $\beta_{offset}^{PUSCH}$ represents a first offset, and $\beta_{offset}^{PUSCH} = \beta_{offset}^{XR-UCI}$. The offset is used to adjust a quantity of resources occupied by the XR-UCI, to adjust the code rate.

For example, the first offset is configured by using radio resource control (radio resource control, RRC) layer signaling, or is indicated by using a media access control (media access control, MAC) control element (control element, CE) MAC CE or DCI.

Formula (6) is applicable to a case in which the XR-UCI is transmitted on the PUSCH, the repeated transmission Type B is not used, and the TBoMS is configured but the value of numberOfSlotsTBoMS is $N_s$, where $N_s$ is greater than 1.

$$Q'_{XR-UCI} = \min\left\{ \left\lceil \frac{\left(O_{XR-UCI} + L_{XR-UCI}\right) \cdot \beta_{offset}^{PUSCH} \cdot \sum_{l=0}^{N_{symb.all}^{PUSCH}-1} M_{sc}^{UCI}(l)}{\frac{1}{N_s} \sum_{r=0}^{C_{UL-SCH}-1} K_r} \right\rceil, \left\lceil \alpha \cdot \sum_{l=l_0}^{N_{symb.all}^{PUSCH}-1} M_{sc}^{UCI}(l) - Q'_{ACK/CG-UCI} \right\rceil \right\} \quad (6)$$

In other words, when the priority indexes of the control information are the same, and the second priorities are sorted as Example #1: HARQ-ACK (CG-UCI) > XR-UCI > CSI part 1 > CSI part 2, the number of bits of the determined XR-UCI of the first resource is related to the resource for transmitting the HARQ-ACK (CG-UCI); or the first parameter includes the number of bits of the XR-UCI and the resource for transmitting the HARQ-ACK (CG-UCI).

Optionally, after determining the resource for transmitting the HARQ-ACK (CG-UCI) and the first resource, the terminal device determines, based on the resource for transmitting the HARQ-ACK (CG-UCI) and the first resource, a resource for transmitting the CSI (including the CSI part 1 and the CSI part 2, or including only the CSI part 1). For a specific manner of determining a resource for transmitting the CSI part 1, refer to Formulas (7) to (9).

Formula (7) is applicable to a case in which the CSI part 1 is transmitted on the PUSCH, the repeated transmission Type B is not used, and the TBoMS is not configured or the TBoMS is configured but the value of numberOfSlotsTBoMS is 1.

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{symb.all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb.all}^{PUSCH}-1} M_{sc}^{UCI}(l) - Q'_{ACK/CG-UCI} - Q'_{XR-UCI} \right\rceil \right\} \quad (7)$$

$Q'_{CSI-1}$ represents the determined resource for transmitting the CSI part 1.

$O_{CSI-1}$ represents a number of bits of the CSI part 1.

$L_{CSI\text{-}1}$ represents a number of check bits of CRC on the CSI part 1. $\beta_{\text{offset}}^{\text{PUSCH}}$ represents an offset, and $\beta_{\text{offset}}^{\text{PUSCH}} = \beta_{\text{offset}}^{CSI-1}$. The offset is used to adjust a quantity of resources occupied by the CSI part 1, to adjust the code rate.

Formula (8) is applicable to a case in which the CSI part 1 is transmitted on the PUSCH, the repeated transmission Type B is not used, and the TBoMS is configured but the value of numberOfSlotsTBoMS is $N_s$, where $N_s$ is greater than 1.

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{\text{symb.all}}^{\text{PUSCH}}-1} M_{\text{sc}}^{\text{UCI}}(l)}{\dfrac{1}{N_s} \sum_{r=0}^{C_{UL\_SCH}-1} K_r} \right\rceil, \right. \tag{8}$$

$$\left. \left\lceil \alpha \cdot \sum_{l=l_0}^{N_{\text{symb.all}}^{\text{PUSCH}}-1} M_{\text{sc}}^{\text{UCI}}(l) - Q'_{ACK/CG-UCI} - Q'_{XR-UCI} \right\rceil \right\}$$

Formula (9) is applicable to a case in which the CSI part 1 is transmitted on the PUSCH, and the repeated transmission Type B is used (the repeated transmission Type B and TBoMS are not both configured in the protocol by default).

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{\text{symb.nominal}}^{\text{PUSCH}}-1} M_{\text{sc, nominal}}^{\text{UCI}}(l)}{\sum_{r=0}^{C_{UL\_SCH}-1} K_r} \right\rceil, \right. \tag{9}$$

$$\left\lceil \alpha \cdot \sum_{l=l_0}^{N_{\text{symb.nominal}}^{\text{PUSCH}}-1} M_{\text{sc,nominal}}^{\text{UCI}}(l) \right\rceil - Q'_{ACK/CG-UCI} - Q'_{XR-UCI},$$

$$\left. \alpha \cdot \sum_{l=l_0}^{N_{\text{symb.actual}}^{\text{PUSCH}}-1} M_{\text{sc,actual}}^{\text{UCI}}(l) - Q'_{ACK/CG-UCI} - Q'_{XR-UCI} \right\}$$

Optionally, for a specific manner of determining a resource for transmitting the CSI part 2, refer to Formulas (10) to (12).

Formula (10) is applicable to a case in which the CSI part 2 is transmitted on the PUSCH, the repeated transmission Type B is not used, and the TBoMS is not configured or the TBoMS is configured but the value of numberOfSlotsTBoMS is 1.

$$Q'_{CSI-2} = \min\left\{ \right.$$

$$\left\lceil \frac{\left(O_{CSI-2} + L_{CSI-2}\right) \cdot \beta_{offset}^{PUSCH} \cdot \sum_{l=0}^{N_{\text{symb.all}}^{\text{PUSCH}}-1} M_{\text{sc}}^{\text{UCI}}(l)}{\sum_{r=0}^{C_{UL\_SCH}-1} K_r} \right\rceil, \left\lceil \alpha \cdot \sum_{l=l_0}^{N_{\text{symb.all}}^{\text{PUSCH}}-1} M_{\text{sc}}^{\text{UCI}}(l) - Q'_{ACK/CG-UCI} - Q'_{XR-UCI} - Q'_{CSI-1} \right\rceil \left. \right\}$$

$$\tag{10}$$

$Q'_{CSI-2}$ represents a quantity of determined resources for transmitting the CSI part 2.

$O_{CSI-2}$ represents a number of bits of the CSI part 2.

$L_{CSI-2}$ represents a number of check bits of CRC on the CSI part 2. $\beta_{\text{offset}}^{\text{PUSCH}}$ represents an offset, and $\beta_{\text{offset}}^{\text{PUSCH}} = \beta_{\text{offset}}^{CSI-2}$. The offset is used to adjust a quantity of resources occupied by the CSI part 2, to adjust the code rate.

Formula (11) is applicable to a case in which the CSI part 2 is transmitted on the PUSCH, the repeated transmission Type B is not used, and the TBoMS is configured but the value of numberOfSlotsTBoMS is $N_s$, where $N_s$ is greater than 1.

$$Q'_{CSI-2} = \min\left\{ \left\lceil \frac{\left(O_{CSI-2} + L_{CSI-2}\right)\cdot \beta_{offset}^{PUSCH} \cdot \sum_{l=0}^{N_{symb,all}^{PUSCH}-1} M_{sc}^{UCI}(l)}{\frac{1}{N_s}\sum_{r=0}^{C_{UL-SCH}-1} K_r} \right\rceil, \right.$$

$$\left. \left\lceil \alpha\cdot \sum_{l=l_0}^{N_{symb,all}^{PUSCH}-1} M_{sc}^{UCI}(l) - Q'_{ACK/CG-UCI} - Q'_{XR-UCI} - Q'_{CSI-1} \right\rceil \right\} \quad (11)$$

Formula (12) is applicable to a case in which the CSI part 2 is transmitted on the PUSCH, and the repeated transmission Type B is used (the repeated transmission Type B and TBoMS are not both configured in the protocol by default).

$$Q'_{CSI-2} = \min\left\{ \left\lceil \frac{\left(O_{CSI-2} + L_{CSI-2}\right)\cdot \beta_{offset}^{PUSCH} \cdot \sum_{l=0}^{N_{symb,nominal}^{PUSCH}-1} M_{sc,\ nominal}^{UCI}(l)}{\sum_{r=0}^{C_{UL-SCH}-1} K_r} \right\rceil, \right.$$

$$(12)$$

$$\left\lceil \alpha\cdot \sum_{l=l_0}^{N_{symb,nominal}^{PUSCH}-1} M_{sc,nominal}^{UCI}(l) \right\rceil - Q'_{ACK/CG-UCI} - Q'_{XR-UCI} - Q'_{CSI-1},$$

$$\left. \alpha\cdot \sum_{l=l_0}^{N_{symb,actual}^{PUSCH}-1} M_{sc,actual}^{UCI}(l) - Q'_{ACK/CG-UCI} - Q'_{XR-UCI} - Q'_{CSI-1} \right\}$$

Based on the foregoing solution, the second priorities of the control information in a case of the same priority indexes are adjusted as follows: HARQ-ACK (CG-UCI) > XR-UCI > CSI part 1 > CSI part 2, to effectively ensure HARQ-ACK transmission and ensure service reliability when a resource is limited. In addition, the second priority of the XR-UCI is set to be higher than the second priority of the CSI, to improve resource utilization.

### Example #2: HARQ-ACK (XR-UCI) > CSI part 1 > CSI part 2

In this example, the HARQ-ACK (XR-UCI) may indicate that the HARQ-ACK and the XR-UCI are jointly encoded. In other words, the second priority of the HARQ-ACK and the second priority of the XR-UCI are higher than the second priority of the CSI.

Optionally, before determining the first resource, the terminal device may receive configuration information from a network device. The configuration information is used to configure whether to jointly encode the HARQ-ACK and the XR-UCI.

For example, the configuration information may include a configuration parameter cg-XR-UCI-Multiplexing. If the parameter is configured or a value of the parameter is configured as enable, when a physical uplink control channel (physical uplink control channel, PUCCH) and a CG-PUSCH overlap, the HARQ-ACK and the XR-UCI are jointly encoded. If the parameter is not configured or a value of the parameter is configured as disable, a CG PUSCH carrying the XR-UCI is discarded.

It should be understood that the CG-UCI is an unlicensed frequency band, and the XR-UCI is a licensed frequency band. Therefore, the CG-UCI and the XR-UCI do not both appear on a same PUSCH. If the CG-UCI and the XR-UCI are to appear on a same PUSCH, a function of the XR-UCI may be added to the CG-UCI, and a new UCI format does not need to be introduced. Therefore, this example is described by using an example in which the CG-UCI and the XR-UCI do not both appear on a same PUSCH.

For example, the terminal device preferentially determines, based on the first parameter, a resource for transmitting the HARQ-ACK and a resource (an example of the first resource) for transmitting the XR-UCI. Specifically, as shown in either of Formulas (13) and (14), the first parameter includes a number of bits of the XR-UCI and a number of bits of the HARQ-ACK.

Formula (13) is applicable to a case in which the HARQ-ACK and the XR-UCI are transmitted on the PUSCH, repeated transmission Type B is not used, and TBoMS is not configured or the TBoMS is configured but a value of numberOfSlotsTBoMS is 1.

$$Q'_{ACK/XR-UCI} = \min\left\{ \left\lceil \frac{\left(O_{ACK} + O_{XR-UCI} + L_{ACK(XR-UCI)}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\} \quad (13)$$

$Q'_{ACK/XR-UCI}$ represents a quantity of determined resources (an example of the first resource) for transmitting the HARQ-ACK (XR-UCI). For example, $Q'_{ACK/XR-UCI}$ represents a quantity of coding and modulation symbols when the HARQ-ACK and the XR-UCI are jointly encoded.

$O_{ACK}$ represents the number of bits of the HARQ-ACK (an example of the number of bits of the first information).

$O_{XR-UCI}$ represents the number of bits of the XR-UCI (an example of the number of bits of the first control information).

$L_{ACK(XR-UCI)}$ represents a number of check bits of CRC on the HARQ-ACK (XR-UCI), and if $O_{ACK} + O_{XR-UCI} \geq 360$, $L_{ACK(XR-UCI)} = 11$; otherwise, calculation is performed by using a coding rule of a polar code. $\beta_{offset}^{PUSCH}$ represents an offset, and $\beta_{offset}^{PUSCH} = \beta_{offset}^{ACK(XR-UCI)}$. The offset is used to adjust a quantity of resources occupied by the HARQ-ACK (XR-UCI), for example, a quantity of resource elements (resource block elements, REs). If the HARQ-ACK is present on the PUSCH (which includes that the HARQ-ACK is present on the PUSCH, and that the HARQ, and the XR-UCI are present on the PUSCH), $\beta_{offset}^{ACK(CG-UCI/XR-UCI)} = \beta_{offset}^{ACK}$.

Formula (14) is applicable to a case in which the HARQ-ACK and the XR-UCI are transmitted on the PUSCH, the repeated transmission Type B is not used, and the TBoMS is configured but the value of numberOfSlotsTBoMS is $N_s$, where $N_s$ is greater than 1.

$$Q'_{ACK/XR-UCI} = \min\left\{ \left\lceil \frac{\left(O_{ACK} + O_{XR-UCI} + L_{ACK(XR-UCI)}\right) \cdot \beta_{offset}^{PUSCH} \cdot \sum_{l=0}^{N_{symb,all}^{PUSCH}-1} M_{sc}^{UCI}(l)}{\frac{1}{N_s} \sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) \right\rceil \right\} \quad (14)$$

Optionally, after determining the resource for transmitting the HARQ-ACK (XR-UCI) and the first resource, the terminal device determines, based on the resource for transmitting the HARQ-ACK (XR-UCI), a resource for transmitting the CSI (including the CSI part 1 and the CSI part 2, or including only the CSI part 1). For a specific manner of determining a resource for transmitting the CSI part 1, refer to Formulas (7) to (9).

Specifically, subtraction of $Q'_{ACK/CG-UCI}$ and $Q'_{XR-UCI}$ in Formulas (7) to (9) may be replaced with subtraction of $Q'_{ACK/XR-UCI}$.

Optionally, after determining the resource for transmitting the HARQ-ACK (XR-UCI) and the resource for transmitting the CSI part 1, the terminal device determines, based on the resource for transmitting the HARQ-ACK (XR-UCI) and the resource for transmitting the CSI part 1, a resource for transmitting the CSI part 2. For a specific manner, refer to Formulas (10) to (12).

Specifically, subtraction of $Q'_{ACK/CG-UCI}$ and $Q'_{XR-UCI}$ in Formulas (10) to (12) may be replaced with subtraction of $Q'_{ACK/XR-UCI}$.

Based on the foregoing solution, the second priorities of the control information in a case of the same priority indexes are adjusted as follows: HARQ-ACK (XR-UCI) > CSI part 1 > CSI part 2, to effectively ensure HARQ-ACK transmission and ensure service reliability when a resource is limited. In addition, the second priority of the XR-UCI is set to be higher than the second priority of the CSI, to improve resource utilization.

### Example #3: HARQ (CG-UCI) > CSI part 1 > XR-UCI > CSI part 2

In this example, before determining, based on the first parameter, a resource for transmitting the XR-UCI, the terminal device may preferentially determine, according to one of Formulas (1) to (4), a resource for transmitting the HARQ-ACK (CG-UCI), and determine, according to Formulas (15) to (18), a resource for transmitting the CSI part 1. The terminal device determines, based on the first parameter, the resource for transmitting the XR-UCI. The first parameter includes a number of bits of the XR-UCI, the resource for transmitting the HARQ-ACK (CG-UCI), and the resource for transmitting the CSI part 1. In other words, the first resource is related to the number of bits of the XR-UCI, the resource for transmitting the HARQ-ACK (CG-UCI), and the resource for transmitting the CSI part 1.

For Formulas (1) to (4), reference may be made to Example #1.

Formula (15) is applicable to a case in which the CSI part 1 is transmitted on the PUSCH, repeated transmission Type B is not used, and TBoMS is not configured or the TBoMS is configured but a value of numberOfSlotsTBoMS is 1.

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) - Q'_{ACK/CG-UCI} \right\rceil \right\} \quad (15)$$

$Q'_{CSI-1}$ represents a quantity of determined resources for transmitting the CSI part 1.

$O_{CSI-1}$ represents a number of bits of the CSI part 1.

$L_{CSI-1}$ represents a number of check bits of CRC on the CSI part 1. $\beta_{offset}^{PUSCH}$ represents an offset, and $\beta_{offset}^{PUSCH} = \beta_{offset}^{CSI-1}$. The offset is used to adjust a quantity of resources occupied by the CSI part 1, to adjust a code rate.

Formula (16) is applicable to a case in which the CSI part 1 is transmitted on the PUSCH, the repeated transmission Type B is not used, and the TBoMS is configured but the value of numberOfSlotsTBoMS is $N_s$, where $N_s$ is greater than 1.

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{symb,all}^{PUSCH}-1} M_{sc}^{UCI}(l)}{\frac{1}{N_s} \sum_{r=0}^{C_{UL-SCH}-1} K_r} \right\rceil, \right.$$
$$\left. \left\lceil \alpha \cdot \sum_{l=l_0}^{N_{symb,all}^{PUSCH}-1} M_{sc}^{UCI}(l) - Q'_{ACK/CG-UCI} \right\rceil \right\} \quad (16)$$

Formula (17) is applicable to a case in which the CSI part 1 is transmitted on the PUSCH, and the repeated transmission Type B is used (the repeated transmission Type B and TBoMS are not both configured in the protocol by default).

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{symb.nominal}^{PUSCH}-1} M_{sc,\ nominal}^{UCI}(l)}{\sum_{r=0}^{C_{UL-SCH}-1} K_r} \right\rceil, \right.$$

$$\left\lceil \alpha \cdot \sum_{l=l_0}^{N_{symb.nominal}^{PUSCH}-1} M_{sc,nominal}^{UCI}(l) \right\rceil - Q'_{ACK/CG-UCI},$$

$$\left. \alpha \cdot \sum_{l=l_0}^{N_{symb.actual}^{PUSCH}-1} M_{sc,actual}^{UCI}(l) - Q'_{ACK/CG-UCI} \right\} \tag{17}$$

Formula (18) is applicable to a case in which the CSI part 1 is transmitted on the PUSCH, and there is no uplink shared channel UL-SCH data.

$$Q'_{CSI-1} = \min\left\{ \left\lceil \frac{\left(O_{CSI-1} + L_{CSI-1}\right) \cdot \beta_{offset}^{PUSCH}}{R \cdot Q_m} \right\rceil, \right.$$

$$\left. \left\lceil \alpha \cdot \sum_{l=l_0}^{N_{symb.nominal}^{PUSCH}-1} M_{sc,nominal}^{UCI}(l) \right\rceil - Q'_{ACK/CG-UCI} \right\} \tag{18}$$

R represents a code rate, and $Q_m$ represents a modulation order.

A specific manner in which the terminal device determines the first resource based on the first parameter is shown in either of Formulas (19) and (20).

Formula (19) is applicable to a case in which the XR-UCI is transmitted on the PUSCH, the repeated transmission Type B is not used, and the TBoMS is not configured or the TBoMS is configured but the value of numberOfSlotsTBoMS is 1.

$$Q'_{XR-UCI} = \min\left\{ \left\lceil \frac{\left(O_{XR-UCI} + L_{XR-UCI}\right) \cdot \beta_{offset}^{PUSCH} \cdot \sum_{l=0}^{N_{symb.all}^{PUSCH}-1} M_{sc}^{UCI}(l)}{\sum_{r=0}^{C_{UL-SCH}-1} K_r} \right\rceil, \right.$$

$$\left. \left\lceil \alpha \cdot \sum_{l=l_0}^{N_{symb.all}^{PUSCH}-1} M_{sc}^{UCI}(l) - Q'_{ACK/CG-UCI} - Q'_{CSI-1} \right\rceil \right\} \tag{19}$$

$Q'_{XR-UCI}$ represents a quantity of determined resources for transmitting the XR-UCI.

$O_{XR-UCI}$ represents the number of bits of the XR-UCI (an example of the number of bits of the first control information).

$L_{XR-UCI}$ indicates a number of check bits of CRC on the HARQ-ACK (CG-UCI). $\beta_{offset}^{PUSCH}$ represents a first offset, and $\beta_{offset}^{PUSCH} = \beta_{offset}^{XR-UCI}$. The first offset is used to adjust a quantity of resources occupied by the XR-UCI, to adjust the code rate.

Formula (20) is applicable to a case in which the XR-UCI is transmitted on the PUSCH, the repeated transmission Type B is not used, and the TBoMS is configured but the value of numberOfSlotsTBoMS is $N_s$, where $N_s$ is greater than 1.

$$Q'_{XR-UCI} = \min\left\{ \left\lceil \frac{\left(O_{XR-UCI} + L_{XR-UCI}\right) \cdot \beta_{offset}^{PUSCH} \cdot \sum_{l=0}^{N_{symb,all}^{PUSCH}-1} M_{sc}^{UCI}(l)}{\frac{1}{N_s} \sum_{r=0}^{C_{UL-SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) - Q'_{ACK/CG-UCI} - Q'_{CSI-1} \right\rceil \right\} \quad (20)$$

In other words, when the priority indexes of the control information are the same, and second priorities are sorted as HARQ-ACK (CG-UCI) > CSI part 1 > XR-UCI > CSI part 2, the first parameter includes the number of bits of the XR-UCI, the resource for transmitting the HARQ-ACK (CG-UCI), and the resource for transmitting the CSI part 1, in other words, the first resource is related to the number of bits of the XR-UCI, the resource for transmitting the HARQ-ACK (CG-UCI), and the resource for transmitting the CSI part 1.

Optionally, for a specific manner in which the terminal device determines a resource for transmitting the CSI part 2, refer to Formulas (10) to (12).

Based on the foregoing solution, the second priorities of the control information in a case of the same priority indexes are adjusted as follows: HARQ-ACK (CG-UCI) > CSI part 1 > XR-UCI > CSI part 2, to effectively ensure HARQ-ACK transmission and ensure service reliability when a resource is limited. In addition, the second priority of the XR-UCI is set to be higher than the second priority of the CSI, to improve resource utilization.

**Example #4: HARQ (CG-UCI) > CSI part 1 > CSI part 2 > XR-UCI**

In this example, before determining the first resource based on the first parameter, the terminal device may determine, according to one of Formulas (1) to (4), a resource for transmitting the HARQ-ACK (CG-UCI). After determining the resource for transmitting the HARQ-ACK (CG-UCI), the terminal device determines, according to Formulas (15) to (18), a resource for transmitting the CSI part 1, and determines, according to Formulas (21) to (23), a resource for transmitting the CSI part 2. The terminal device determines the first resource based on the first parameter. The first parameter includes a number of bits of the XR-UCI, the resource for transmitting the HARQ-ACK (CG-UCI), the resource for transmitting the CSI part 1, and the resource for transmitting the CSI part 2. In other words, in this example, a resource for transmitting the XR-UCI is related to the number of bits of the XR-UCI, the resource for transmitting the HARQ-ACK (CG-UCI), the resource for transmitting the CSI part 1, and the resource for transmitting the CSI part 2.

For Formulas (1) to (4), refer to the descriptions in Example #1. For Formulas (15) to (18), refer to the descriptions in Example #3.

Optionally, the terminal device determines, according to one of Formulas (21) to (24), the resource for transmitting the CSI part 2.

Formula (21) is applicable to a case in which the CSI part 2 is transmitted on the PUSCH, repeated transmission Type B is not used, and TBoMS is not configured or the TBoMS is configured but a value of numberOfSlotsTBoMS is 1.

$$Q'_{CSI-2} = \min\left\{ \right.$$

$$\left\lceil \frac{\left(O_{CSI-2} + L_{CSI-2}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,all}^{PUSCH}-1} M_{sc}^{UCI}(l) - Q'_{ACK/CG-UCI} - Q'_{CSI-1} \right\rceil \right\} \quad (21)$$

$Q'_{CSI-2}$   represents a quantity of determined resources for transmitting the CSI part 2.

$O_{CSI-2}$ represents a number of bits of the CSI part 2.

$L_{CSI-2}$ represents a number of check bits of CRC on the CSI part 2. $\beta_{offset}^{PUSCH}$   represents an offset, and $\beta_{offset}^{PUSCH} = \beta_{offset}^{CSI-2}$. The offset is used to adjust a quantity of resources occupied by the CSI part 2, to adjust a code rate.

Formula (22) is applicable to a case in which the CSI part 2 is transmitted on the PUSCH, the repeated transmission Type B is not used, and the TBoMS is configured but the value of numberOfSlotsTBoMS is $N_s$, where $N_s$ is greater than 1.

$$Q'_{CSI-2} = \min\left\{ \left\lceil \frac{\left(O_{CSI-2} + L_{CSI-2}\right) \cdot \beta_{offset}^{PUSCH} \cdot \sum_{l=0}^{N_{symb.all}^{PUSCH}-1} M_{sc}^{UCI}(l)}{\frac{1}{N_s} \sum_{r=0}^{C_{UL-SCH}-1} K_r} \right\rceil, \right.$$

$$\left. \left\lceil \alpha \cdot \sum_{l=l_0}^{N_{symb.all}^{PUSCH}-1} M_{sc}^{UCI}(l) - Q'_{ACK/CG-UCI} - Q'_{CSI-1} \right\rceil \right\} \quad (22)$$

Formula (23) is applicable to a case in which the CSI part 2 is transmitted on the PUSCH, and the repeated transmission Type B is used (the repeated transmission Type B and TBoMS are not both configured in the protocol by default).

$$Q'_{CSI-2} = \min\left\{ \left\lceil \frac{\left(O_{CSI-2} + L_{CSI-2}\right) \cdot \beta_{offset}^{PUSCH} \cdot \sum_{l=0}^{N_{symb.nominal}^{PUSCH}-1} M_{sc,\ nominal}^{UCI}(l)}{\sum_{r=0}^{C_{UL-SCH}-1} K_r} \right\rceil, \right.$$

$$\left. \left\lceil \alpha \cdot \sum_{l=l_0}^{N_{symb.nominal}^{PUSCH}-1} M_{sc,nominal}^{UCI}(l) \right\rceil - Q'_{ACK/CG-UCI} - Q'_{CSI-1}, \alpha \cdot \sum_{l=l_0}^{N_{symb.actual}^{PUSCH}-1} M_{sc,actual}^{UCI}(l) - Q'_{ACK/CG-UCI} - Q'_{CSI-1} \right\} \quad (23)$$

Formula (24) is applicable to a case in which the CSI part 2 is transmitted on the PUSCH, and there is no UL-SCH data.

$$Q'_{CSI-2} = \min\left\{ \left\lceil \frac{\left(O_{CSI-2} + L_{CSI-2}\right) \cdot \beta_{offset}^{PUSCH}}{R \cdot Q_m} \right\rceil, \right.$$

$$\left. \left\lceil \alpha \cdot \sum_{l=l_0}^{N_{symb.nominal}^{PUSCH}-1} M_{sc,nominal}^{UCI}(l) \right\rceil - Q'_{ACK/CG-UCI} - Q'_{CSI-1} \right\} \quad (24)$$

$R$ represents a code rate, and $Q_m$ represents a modulation order.

A manner in which the terminal device determines the first resource based on the first parameter is shown in either of Formulas (25) and (26).

Formula (25) is applicable to a case in which the XR-UCI is transmitted on the PUSCH, the repeated transmission Type B is not used, and the TBoMS is not configured or the TBoMS is configured but the value of numberOfSlotsTBoMS is 1.

$$Q'_{XR-UCI} = \min\left\{ \left\lceil \frac{\left(O_{XR-UCI} + L_{XR-UCI}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL\_SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) - Q'_{ACK/CG-UCI} - Q'_{CSI-1} - Q'_{CSI-2} \right\rceil \right\} \qquad (25)$$

$Q'_{XR-UCI}$ represents a quantity of determined resources for transmitting the XR-UCI. $Q'_{ACK/CG-UCI}$ represents a quantity of determined resources for transmitting the HARQ-ACK (CG-UCI).

$O_{XR-UCI}$ represents the number of bits of the XR-UCI (an example of the number of bits of the first control information).

$L_{XR-UCI}$ indicates a number of check bits of CRC on the HARQ-ACK (CG-UCI). $\beta_{offset}^{PUSCH}$ represents a first offset, and $\beta_{offset}^{PUSCH} = \beta_{offset}^{XR-UCI}$. The first offset is used to adjust a quantity of resources occupied by the XR-UCI, to adjust the code rate.

Formula (26) is applicable to a case in which the XR-UCI is transmitted on the PUSCH, the repeated transmission Type B is not used, and the TBoMS is configured but the value of numberOfSlotsTBoMS is $N_s$, where $N_s$ is greater than 1.

$$Q'_{XR-UCI} = \min\left\{ \left\lceil \frac{\left(O_{XR-UCI} + L_{XR-UCI}\right) \cdot \beta_{offset}^{PUSCH} \cdot \sum_{l=0}^{N_{symb,all}^{PUSCH}-1} M_{sc}^{UCI}(l)}{\frac{1}{N_s} \sum_{r=0}^{C_{UL\_SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) - Q'_{ACK/CG-UCI} - Q'_{CSI-1} - Q'_{CSI-2} \right\rceil \right\} \qquad (26)$$

Based on the foregoing solution, the second priorities of the control information in a case of the same priority indexes are adjusted as follows: HARQ (CG-UCI) > CSI part 1 > CSI part 2 > XR-UCI, to effectively ensure HARQ-ACK transmission and ensure service reliability when a resource is limited.

**Example #5: HARQ-ACK (CG-UCI and XR-UCI) > CSI part 1 > CSI part 2**

In this example, the HARQ-ACK (CG-UCI and XR-UCI) may indicate that the first information and the XR-UCI are jointly encoded. In other words, the second priority of the first information and the second priority of the XR-UCI are higher than the second priority of the CSI.

Optionally, before determining the first resource, the terminal device may receive configuration information from a network device. The configuration information is used to configure whether to jointly encode the first information and the XR-UCI.

For example, the configuration information may include a configuration parameter cg-XR-UCI-Multiplexing. If the parameter is configured or a value of the parameter is configured as enable, when a PUCCH and a CG-PUSCH overlap, the HARQ-ACK (CG-UCI) and the XR-UCI are jointly encoded. If the parameter is not configured or a value of the parameter is configured as disable, a CG PUSCH carrying the XR-UCI is discarded.

It should be understood that, in this example, the XR-UCI may be in an unlicensed frequency band. Because the CG-UCI is in the unlicensed frequency band, the CG-UCI and the XR-UCI may both appear on a same PUSCH, and the HARQ-ACK, the CG-UCI, and the XR-UCI may be jointly encoded.

For example, the terminal device may determine, based on the first parameter, a resource (an example of the first resource) for transmitting the XR-UCI. Specifically, as shown in either of Formulas (33) and (34), the first parameter includes a number of bits of the XR-UCI and a number of bits of the first information.

Formula (33) is applicable to a case in which the HARQ-ACK (CG-UCI) (an example of the first information) and the XR-UCI are transmitted on the PUSCH, repeated transmission Type B is not used, and TBoMS is not configured or the TBoMS is configured but a value of numberOfSlotsTBoMS is 1.

$$Q'_{ACK/CG-UCI/XR-UCI} =$$

$$\min\left\{ \left\lceil \frac{\left(O_{ACK} + O_{CG-UCI} + O_{XR-UCI} + L_{ACK(CG-UCI/XR-UCI)}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) \right\rceil \right\} \tag{33}$$

$Q'_{ACK/CG-UCI/XR-UCI}$ represents a quantity of determined resources (an example of the first resource) for transmitting the HARQ-ACK (CG-UCI) and the XR-UCI. For example, $Q'_{ACK/CG-UCI/XR-UCI}$ represents a quantity of coding and modulation symbols when the HARQ-ACK (CG-UCI) and the XR-UCI are jointly encoded.

$O_{ACK} + O_{CG-UCI}$ represents a number of bits of the HARQ-ACK (CG-UCI) (an example of the number of bits of the first information). If only the HARQ-ACK is present and no CG-UCI is present on the PUSCH, $O_{ACK} + O_{CG-UCI} = O_{ACK}$. If only the CG-UCI is present and no HARQ-ACK is present on the PUSCH, $O_{ACK} + O_{CG-UCI} = O_{CG-UCI}$. If only the XR-UCI is present and no HARQ-ACK (CG-UCI) is present on the PUSCH, $O_{ACK} + O_{CG-UCI} = O_{XR-UCI}$.

$O_{XR-UCI}$ represents the number of bits of the XR-UCI (an example of the number of bits of the first control information).

$L_{ACK(CG-UCI/XR-UCI)}$ represents a number of check bits of CRC when the HARQ-ACK (CG-UCI) and the XR-UCI are jointly encoded. When no HARQ-ACK is present (that is, the CG-UCI and the XR-UCI are present), if $O_{CG-UCI} + O_{XR-UCI} \geq 360$, $L_{ACK(CG-UCI/XR-UCI)} = L_{CG-UCI/XR-UCI} = 11$; otherwise, calculation is performed by using a coding rule of a polar code. When no CG-UCI is present (that is, the HARQ-ACK and the XR-UCI are present), if $O_{HARQ-ACK} + O_{XR-UCI} \geq 360$, $L_{ACK(CG-UCI/XR-UCI)} = L_{HARQ-ACK/XR-UCI} = 11$; otherwise, calculation is performed by using a coding rule of a polar code. When no HARQ-ACK (CG-UCI) is present (that is, only the XR-UCI is present), if $O_{XR-UCI} \geq 360$, $L_{ACK(CG-UCI/XR-UCI)} = L_{XR-UCI} = 11$; otherwise, calculation is performed by using a coding rule of a polar code. $\beta_{offset}^{PUSCH}$ represents an offset, and $\beta_{offset}^{PUSCH} = \beta_{offset}^{ACK(CG-UCI/XR-UCI)}$. The offset is used to adjust a quantity of occupied resources for jointly encoding the HARQ-ACK (CG-UCI) and the XR-UCI, for example, a quantity of resource elements (resource block elements, REs). If the HARQ-ACK is present on the PUSCH (including that the HARQ-ACK is present, the HARQ-ACK and the CG-UCI are present, the HARQ and the XR-UCI are present, and the HARQ, the CG-UCI, and the XR-UCI are all present on the PUSCH), $\beta_{offset}^{ACK(CG-UCI/XR-UCI)} = \beta_{offset}^{ACK}$. If only the CG-UCI is present on the PUSCH, $\beta_{offset}^{ACK(CG-UCI/XR-UCI)} = \beta_{offset}^{CG-UCI}$. If only the XR-UCI is present on the PUSCH, $\beta_{offset}^{ACK(CG-UCI/XR-UCI)} = \beta_{offset}^{XR-UCI}$. If only the CG-UCI and the XR-UCI are present, $\beta_{offset}^{ACK(CG-UCI/XR-UCI)} = \beta_{offset}^{CG-UCI}$.

Formula (34) is applicable to a case in which the HARQ-ACK (CG-UCI) and the XR-UCI are transmitted on the PUSCH, the repeated transmission Type B is not used, and the TBoMS is configured but the value of numberOfSlotsTBoMS is $N_s$, where $N_s$ is greater than 1.

$$Q'_{ACK/CG-UCI/XR-UCI} = \min\left\{ \left\lceil \frac{\left(O_{ACK} + O_{CG-UCI} + O_{XR-UCI} + L_{ACK(CG-UCI/XR-UCI)}\right) \cdot \beta_{offset}^{PUSCH} \cdot \sum_{l=0}^{N_{symb.all}^{PUSCH}-1} M_{sc}^{UCI}(l)}{\frac{1}{N_s} \sum_{r=0}^{C_{UL-SCH}-1} K_r} \right\rceil, \right.$$

$$\left. \left\lceil \alpha \cdot \sum_{l=l_0}^{N_{symb.all}^{PUSCH}-1} M_{sc}^{UCI}(l) \right\rceil \right\} \tag{34}$$

Optionally, after determining the first resource, the terminal device determines, based on the first resource, a resource for transmitting the CSI (including the CSI part 1 and the CSI part 2, or including only the CSI part 1). For a specific manner of determining a resource for transmitting the CSI part 1, refer to any one of Formulas (35) to (37).

Formula (35) is applicable to a case in which the CSI part 1 is transmitted on the PUSCH, the repeated transmission Type B is not used, and the TBoMS is not configured or the TBoMS is configured but the value of numberOfSlotsTBoMS is 1.

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{symb.all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb.all}^{PUSCH}-1} M_{sc}^{UCI}(l) - Q'_{ACK/CG-UCI/XR-UCI} \right\rceil \right\} \tag{35}$$

$Q'_{CSI-1}$ represents the determined resource for transmitting the CSI part 1.

$O_{CSI-1}$ represents a number of bits of the CSI part 1.

$L_{CSI-1}$ represents a number of check bits of CRC on the CSI part 1. $\beta_{offset}^{PUSCH}$ represents an offset, and $\beta_{offset}^{PUSCH} = \beta_{offset}^{CSI-1}$. The offset is used to adjust a quantity of resources occupied by the CSI part 1, to adjust a code rate.

Formula (36) is applicable to a case in which the CSI part 1 is transmitted on the PUSCH, the repeated transmission Type B is not used, and the TBoMS is configured but the value of numberOfSlotsTBoMS is $N_s$, where $N_s$ is greater than 1.

$$Q'_{CSI-1} = \min\left\{ \left\lceil \frac{\left(O_{CSI-1} + L_{CSI-1}\right) \cdot \beta_{offset}^{PUSCH} \cdot \sum_{l=0}^{N_{symb.all}^{PUSCH}-1} M_{sc}^{UCI}(l)}{\frac{1}{N_s} \sum_{r=0}^{C_{UL-SCH}-1} K_r} \right\rceil, \right.$$

$$\left. \left\lceil \alpha \cdot \sum_{l=l_0}^{N_{symb.all}^{PUSCH}-1} M_{sc}^{UCI}(l) - Q'_{ACK/CG-UCI/XR-UCI} \right\rceil \right\} \tag{36}$$

Formula (37) is applicable to a case in which the CSI part 1 is transmitted on the PUSCH, and the repeated transmission Type B is used (the repeated transmission Type B and TBoMS are not both configured in the protocol by default).

$$Q'_{CSI-1} = \min \left\{ \left\lceil \frac{\left(O_{CSI-1} + L_{CSI-1}\right) \cdot \beta_{offset}^{PUSCH} \cdot \sum_{l=0}^{N_{symb,nominal}^{PUSCH}-1} M_{sc,\ nominal}^{UCI}(l)}{\sum_{r=0}^{C_{UL-SCH}-1} K_r} \right\rceil, \right.$$

$$\left\lceil \alpha \cdot \sum_{l=l_0}^{N_{symb,nominal}^{PUSCH}-1} M_{sc,nominal}^{UCI}(l) \right\rceil - Q'_{ACK/CG-UCI/XR-UCI},$$

$$\left. \alpha \cdot \sum_{l=l_0}^{N_{symb,actual}^{PUSCH}-1} M_{sc,actual}^{UCI}(l) - Q'_{ACK/CG-UCI/XR-UCI} \right\} \tag{37}$$

Optionally, if the CSI part 2 is present, for a specific manner of determining a resource for transmitting the CSI part 2, refer to Formulas (38) to (40).

Formula (38) is applicable to a case in which the CSI part 2 is transmitted on the PUSCH, the repeated transmission Type B is not used, and the TBoMS is not configured or the TBoMS is configured but the value of numberOfSlotsTBoMS is 1.

$$Q'_{CSI-2} = \min \left\{ \left\lceil \frac{\left(O_{CSI-2} + L_{CSI-2}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) - Q'_{ACK/CG-UCI/XR-UCI} - Q'_{CSI-1} \right\rceil \right\} \tag{38}$$

$Q'_{CSI-2}$ represents a quantity of determined resources for transmitting the CSI part 2.

$O_{CSI-2}$ represents a number of bits of the CSI part 2.

$L_{CSI-2}$ represents a number of check bits of CRC on the CSI part 2. $\beta_{offset}^{PUSCH}$ represents an offset, and $\beta_{offset}^{PUSCH} = \beta_{offset}^{CSI-2}$. The offset is used to adjust a quantity of resources occupied by the CSI part 2, to adjust the code rate.

Formula (39) is applicable to a case in which the CSI part 2 is transmitted on the PUSCH, the repeated transmission Type B is not used, and the TBoMS is configured but the value of numberOfSlotsTBoMS is $N_s$, where $N_s$ is greater than 1.

$$Q'_{CSI-2} = \min \left\{ \left\lceil \frac{\left(O_{CSI-2} + L_{CSI-2}\right) \cdot \beta_{offset}^{PUSCH} \cdot \sum_{l=0}^{N_{symb,all}^{PUSCH}-1} M_{sc}^{UCI}(l)}{\frac{1}{N_s} \sum_{r=0}^{C_{UL-SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) - Q'_{ACK/CG-UCI/XR-UCI} - Q'_{CSI-1} \right\rceil \right\} \tag{39}$$

Formula (40) is applicable to a case in which the CSI part 2 is transmitted on the PUSCH, and the repeated transmission Type B is used (the repeated transmission Type B and TBoMS are not both configured in the protocol by default).

$$Q'_{CSI-2} = \min\left\{ \left\lceil \frac{\left(O_{CSI-2} + L_{CSI-2}\right)\cdot \beta_{offset}^{PUSCH}\cdot \sum_{l=0}^{N_{symb,nominal}^{PUSCH}-1} M_{sc,\ nominal}^{UCI}(l)}{\sum_{r=0}^{C_{UL-SCH}-1} K_r} \right\rceil, \right.$$

$$\left\lceil \alpha\cdot \sum_{l=l_0}^{N_{symb,nominal}^{PUSCH}-1} M_{sc,nominal}^{UCI}(l) \right\rceil - Q'_{ACK/CG-UCI/XR-UCI} - Q'_{CSI-1},$$

(40)

$$\left. \alpha\cdot \sum_{l=l_0}^{N_{symb,actual}^{PUSCH}-1} M_{sc,actual}^{UCI}(l) - Q'_{ACK/CG-UCI/XR-UCI} - Q'_{CSI-1} \right\}$$

Based on the foregoing solution, the second priorities of the control information in a case of the same priority indexes are adjusted as follows: HARQ-ACK (CG-UCI and XR-UCI) > CSI part 1 > CSI part 2, to effectively ensure HARQ-ACK transmission and ensure service reliability when a resource is limited. In addition, the second priority of the XR-UCI is set to be higher than the second priority of the CSI, to improve resource utilization.

**Case 2: The priority index of the first control information is different from a priority index of at least one type of information in the second control information.**

That the priority index of the first control information is different from the priority index of the at least one type of information in the second control information may include six cases, as shown in Table 1. "0" and "1" respectively indicate that a value of a priority index is 0 or 1.

When the priority index of the first control information and the priority index of the second control information include six cases, for any one of the cases, second priorities of the HARQ-ACK (CG-UCI), the XR-UCI, and the CSI may be shown in Example #1 to Example #4 in Case 1.

Table 1

| Case | HARQ ACK (CG-UCI) | XR-UCI | CSI |
|------|-------------------|--------|-----|
| 1 | 0 | 0 | 1 |
| 2 | 0 | 1 | 0 |
| 3 | 0 | 1 | 1 |
| 4 | 1 | 0 | 0 |
| 5 | 1 | 0 | 1 |
| 6 | 1 | 1 | 0 |

The following separately describes a manner of determining the first resource when the priority indexes of the first control information and the second control information correspond to the six cases, and when second priorities of the control information in the cases are different.

In Case 1, because a priority index of the CSI is 1, the terminal device preferentially determines a resource for transmitting the CSI, and then determines the first resource and a resource for transmitting other information in the second control information.

For example, the terminal device determines, according to Formulas (15) to (18), a resource for transmitting a CSI part 1, and it is assumed that $Q'_{ACK/CG-UCI} = 0$. For Formulas (15) to (18), refer to Example #3 in Case 1. Usually, when the priority index of the CSI is greater than a priority index of the HARQ-ACK, the CSI may include only the CSI part 1.

Optionally, the resource for transmitting the CSI may further include a resource for transmitting a CSI part 2. The terminal device may determine, according to Formulas (21) to (24), the resource for transmitting the CSI part 2, and it is assumed that $Q'_{ACK/CG-UCI} = 0$.

After determining the resource for transmitting the CSI, the terminal device determines resources (including the first resource) for other control information based on rankings of the second priorities in Example #1 to Example #4 in Case 1. It may be understood that, in this case, the second priority of the CSI does not need to be considered.

In Case 1, the resources for transmitting the other control information are determined based on different rankings of the second priorities, as shown in Example #1 to Example #3.

**Example #1: HARQ-ACK (CG-UCI) > XR-UCI**

In this example, the terminal device first determines, according to Formulas (27) to (30), a resource for transmitting the HARQ-ACK (CG-UCI).

Formula (27) is applicable to a case in which the HARQ-ACK (CG-UCI) is transmitted on the PUSCH, repeated transmission Type B is not used, and TBoMS is not configured or the TBoMS is configured but a value of number-OfSlotsTBoMS is 1.

$$Q'_{ACK/CG-UCI} = \min\left\{ \left\lceil \frac{\left(O_{ACK} + O_{CG-UCI} + L_{ACK(CG-UCI)}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) - Q'_{CSI-1} \right\rceil \right\} \quad (27)$$

Formula (28) is applicable to a case in which the HARQ-ACK (CG-UCI) is transmitted on the PUSCH, the repeated transmission Type B is not used, and the TBoMS is configured but the value of numberOfSlotsTBoMS is $N_s$, where $N_s$ is greater than 1.

$$Q'_{ACK/CG-UCI} = \min\left\{ \left\lceil \frac{\left(O_{ACK} + O_{CG-UCI} + L_{ACK(CG-UCI)}\right) \cdot \beta_{offset}^{PUSCH} \cdot \sum_{l=0}^{N_{symb,all}^{PUSCH}-1} M_{sc}^{UCI}(l)}{\frac{1}{N_s} \sum_{r=0}^{C_{UL-SCH}-1} K_r} \right\rceil, \right.$$

$$\left. \left\lceil \alpha \cdot \sum_{l=l_0}^{N_{symb,all}^{PUSCH}-1} M_{sc}^{UCI}(l) - Q'_{CSI-1} \right\rceil \right\} \quad (28)$$

Formula (29) is applicable to a case in which the HARQ-ACK (CG-UCI) is transmitted on the PUSCH, and the repeated transmission Type B is used (the repeated transmission Type B and TBoMS are not both configured in the protocol by default).

$$Q'_{ACK/CG-UCI} = \min\left\{ \left\lceil \frac{\left(O_{ACK} + O_{CG-UCI} + L_{ACK(CG-UCI)}\right) \cdot \beta_{offset}^{PUSCH} \cdot \sum_{l=0}^{N_{symb,nominal}^{PUSCH}-1} M_{sc,\,nominal}^{UCI}(l)}{\sum_{r=0}^{C_{UL-SCH}-1} K_r} \right\rceil, \right.$$

$$\left. \left\lceil \alpha \cdot \sum_{l=l_0}^{N_{symb,nominal}^{PUSCH}-1} M_{sc,nominal}^{UCI}(l) - Q'_{CSI-1} \right\rceil, \alpha \cdot \sum_{l=l_0}^{N_{symb,actual}^{PUSCH}-1} M_{sc,actual}^{UCI}(l) - Q'_{CSI-1} \right\} \quad (29)$$

Formula (30) is applicable to a case in which the HARQ-ACK (CG-UCI) is transmitted on the PUSCH, and there is no UL-SCH data.

$$Q'_{ACK/CG-UCI} = \min\{ \left\lceil \frac{\left(O_{ACK} + O_{CG-UCI} + L_{ACK(CG-UCI)}\right) \cdot \beta_{offset}^{PUSCH}}{R \cdot Q_m} \right\rceil ,$$

$$\left\lceil \alpha \cdot \sum_{l=l_0}^{N_{symb,nominal}^{PUSCH}-1} M_{sc,nominal}^{UCI}(l) \right\rceil - Q'_{CSI-1} \} \tag{30}$$

$R$ represents a code rate, and $Q_m$ represents a modulation order.

After determining the resources for transmitting the HARQ-ACK (CG-UCI) and the CSI, the terminal device determines the first resource based on the first parameter. The first parameter may include a number of bits of the XR-UCI, the resource for transmitting the HARQ-ACK (CG-UCI), and the resource for transmitting the CSI. A specific manner of determining the first resource is shown in either of Formulas (25) and (26), and it is assumed that $Q'_{CSI-2} = 0$.

Optionally, the terminal device may further determine, in the manner in Example #4 in Case 1, the resource for transmitting the CSI-2.

### Example #2: HARQ-ACK (XR-UCI)

In other words, the HARQ-ACK and the XR-UCI are jointly encoded, and that the HARQ-ACK and the XR-UCI are jointly encoded may also be considered as that the HARQ-ACK and the XR-UCI have a same second priority.

A specific manner in which the terminal device determines the first resource based on the first parameter is shown in either of Formulas (31) and (32). The first parameter includes the number of bits of the XR-UCI and a number of bits of the HARQ-ACK (an example of the first information).

Formula (31) is applicable to a case in which the HARQ-ACK and the XR-UCI are transmitted on the PUSCH, the repeated transmission Type B is not used, and the TBoMS is not configured or the TBoMS is configured but the value of numberOfSlotsTBoMS is 1.

$$Q'_{ACK(XR-UCI)} = \min\{ \left\lceil \frac{\left(O_{ACK} + O_{XR-UCI} + L_{ACK(XR-UCI)}\right) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil ,$$

$$\left\lceil \alpha \cdot \sum_{l=l_0}^{N_{symb,all}^{PUSCH}-1} M_{sc}^{UCI}(l) \right\rceil - Q'_{CSI-1} \} \tag{31}$$

$Q'_{ACK/XR-UCI}$ represents a quantity of determined resources (an example of the first resource) for transmitting the HARQ-ACK (XR-UCI). For example, $Q'_{ACK/XR-UCI}$ represents a quantity of coding and modulation symbols when the HARQ-ACK and the CG-UCI are jointly encoded.

$O_{ACK}$ represents the number of bits of the HARQ-ACK (an example of the number of bits of the first information).

$O_{XR-UCI}$ represents the number of bits of the XR-UCI (an example of the number of bits of the first control information).

$L_{ACK(XR-UCI)}$ indicates a number of check bits of CRC on the HARQ-ACK (XR-UCI). $\beta_{offset}^{PUSCH}$ represents an offset, and $\beta_{offset}^{PUSCH} = \beta_{offset}^{ACK(XR-UCI)}$. The offset is used to adjust a quantity of resources occupied by the HARQ-ACK (XR-UCI), for example, a quantity of REs.

Formula (32) is applicable to a case in which the HARQ-ACK and the XR-UCI are transmitted on the PUSCH, the repeated transmission Type B is not used, and the TBoMS is configured but the value of numberOfSlotsTBoMS is $N_s$, where $N_s$ is greater than 1.

$$Q'_{ACK/XR-UCI} = \min\left\{\left\lceil\frac{\left(O_{ACK} + O_{XR-UCI} + L_{ACK(XR-UCI)}\right)\cdot\beta_{offset}^{PUSCH}\cdot\sum\limits_{l=0}^{N_{symb.all}^{PUSCH}-1} M_{sc}^{UCI}(l)}{\dfrac{1}{N_s}\sum\limits_{r=0}^{C_{UL-SCH}-1} K_r}\right\rceil,\right.$$

$$\left.\left\lceil\alpha\cdot\sum\limits_{l=l_0}^{N_{symb.all}^{PUSCH}-1} M_{sc}^{UCI}(l)\right\rceil - Q'_{CSI-1}\right\} \tag{32}$$

Optionally, the terminal device may further determine, in the manner in Example #2 in Case 1, the resource for transmitting the CSI-2.

**Example #3: HARQ-ACK (CG-UCI and XR-UCI)**

In other words, the HARQ-ACK (CG-UCI) and the XR-UCI are jointly encoded, and that the HARQ-ACK (CG-UCI) and the XR-UCI are jointly encoded may also be considered as that the HARQ-ACK (CG-UCI) and the XR-UCI have a same second priority.

A specific manner in which the terminal device determines the first resource based on the first parameter is shown in either of Formulas (35) and (36). The first parameter includes the number of bits of the XR-UCI and the number of bits of the HARQ-ACK (CG-UCI) (an example of the first information).

Formula (35) is applicable to a case in which the HARQ-ACK (CG-UCI) and the XR-UCI are transmitted on the PUSCH, the repeated transmission Type B is not used, and the TBoMS is not configured or the TBoMS is configured but the value of numberOfSlotsTBoMS is 1.

$$Q'_{ACK/CG-UCI/XR-UCI} = \min\left\{\right.$$

$$\left\lceil\frac{\left(O_{ACK} + O_{CG-UCI} + O_{XR-UCI} + L_{ACK(CG-UCI/XR-UCI)}\right)\cdot\beta_{offset}^{PUSCH}\cdot\sum\limits_{l=0}^{N_{symb.all}^{PUSCH}-1} M_{sc}^{UCI}(l)}{\sum\limits_{r=0}^{C_{UL-SCH}-1} K_r}\right\rceil,$$

$$\left.\left\lceil\alpha\cdot\sum\limits_{l=l_0}^{N_{symb.all}^{PUSCH}-1} M_{sc}^{UCI}(l) - Q'_{CSI-1}\right\rceil\right\} \tag{35}$$

For meanings represented by $Q'_{ACK/CG-UCI/XR-UCI}$, $O_{ACK} + O_{CG-UCI}$, $O_{XR-UCI}$, $L_{ACK(CG-UCI/XR-UCI)}$, and $\beta_{offset}^{PUSCH}$, refer to Example #5 in Case 1.

Formula (32) is applicable to a case in which the HARQ-ACK and the XR-UCI are transmitted on the PUSCH, the repeated transmission Type B is not used, and the TBoMS is configured but the value of numberOfSlotsTBoMS is $N_s$, where $N_s$ is greater than 1.

$$Q'_{ACK/CG-UCI/XR-UCI} = \min\left\{\right.$$

$$\left\lceil\frac{\left(O_{ACK} + O_{CG-UCI} + O_{XR-UCI} + L_{ACK(CG-UCI/XR-UCI)}\right)\cdot\beta_{offset}^{PUSCH}\cdot\sum\limits_{l=0}^{N_{symb.all}^{PUSCH}-1} M_{sc}^{UCI}(l)}{\dfrac{1}{N_s}\sum\limits_{r=0}^{C_{UL-SCH}-1} K_r}\right\rceil,$$

$$\left.\left\lceil\alpha\cdot\sum\limits_{l=l_0}^{N_{symb.all}^{PUSCH}-1} M_{sc}^{UCI}(l)\right\rceil - Q'_{CSI-1}\right\} \tag{36}$$

Optionally, the terminal device may further determine, in the manner in Example #2 in Case 1, the resource for transmitting the CSI-2.

In Case 2, because a priority index of the XR-UCI is 1, the terminal device preferentially determines the first resource based on the first parameter, and then determines the resource for transmitting the second control information. The first parameter includes a number of bits of the XR-UCI.

For example, the terminal device determines the first resource according to Formulas (5) and (6), and it is assumed that $Q'_{ACK/CG-UCI} = 0$. For Formulas (5) and (6), refer to Example #1 in Case 1.

Optionally, the terminal device determines a resource for transmitting the HARQ-ACK (CG-UCI). For example, the terminal device may determine, according to Formulas (27) to (30), the resource for transmitting the HARQ-ACK (CG-UCI), and replace $Q'_{CSI}$ with $Q'_{XR-UCI}$.

Optionally, the terminal device determines a resource for transmitting the CSI. For example, the terminal device may determine, according to Formulas (7) to (12), resources for transmitting a CSI part 1 and a CSI part 2.

In Case 3, because priority indexes of the XR-UCI and the CSI are 1, the terminal device may preferentially determine the first resource based on the first parameter, where the first parameter includes a number of bits of the XR-UCI; or preferentially determine a resource for transmitting the CSI, and then determine the first resource based on the first parameter, where the first parameter includes a number of bits of the XR-UCI and the resource for transmitting the CSI. Finally, the terminal device determines a resource for transmitting the HARQ-ACK (CG-UCI). The following uses two examples for description based on different second priorities of the XR-UCI and the CSI.

**Example #1: XR-UCI > CSI part 1**

For example, the terminal device determines the first resource according to Formulas (5) and (6), and it is assumed that $Q'_{ACK/CG-UCI} = 0$. For Formulas (5) and (6), refer to Example #1 in Case 1.

Optionally, after determining the first resource, the terminal device determines a resource for transmitting the CSI part 1. For example, the terminal device may determine, according to Formulas (7) to (9), the resource for transmitting the CSI part 1, and it is assumed that $Q'_{ACK/CG-UCI} = 0$.

Optionally, the terminal device determines the resource for transmitting the HARQ-ACK (CG-UCI). For example, the terminal device may determine, according to Formulas (27) to (29), the resource for transmitting the HARQ-ACK (CG-UCI), and replace subtraction of $Q'_{CSI-1}$ with subtraction of $Q'_{XR-UCI}$ and $Q'_{CSI-1}$.

Optionally, the terminal device determines the resource for transmitting the CSI. For example, the terminal device may determine, according to Formulas (10) to (12), a resource for transmitting a CSI part 2.

**Example #2: CSI part 1 > XR-UCI**

For example, the terminal device determines, according to Formulas (15) to (18), a resource for transmitting the CSI part 1, and it is assumed that $Q'_{ACK/CG-UCI} = 0$. For Formulas (15) to (18), refer to Example #3 in Case 1. Usually, when a priority index of the CSI is greater than a priority index of the HARQ-ACK, the CSI may include only the CSI part 1.

After the resource for transmitting the CSI part 1 is determined, the first resource may be determined according to one of Formulas (25) and (26), and it is assumed that $Q'_{CSI-2} = 0$ and $Q'_{ACK/CG-UCI} = 0$.

Optionally, the terminal device determines the resource for transmitting the HARQ-ACK (CG-UCI). For example, the terminal device may determine, according to Formulas (27) to (29), the resource for transmitting the HARQ-ACK (CG-UCI), and replace subtraction of $Q'_{CSI-1}$ with subtraction of $Q'_{XR-UCI}$ and $Q'_{CSI-1}$.

Optionally, the terminal device determines the resource for transmitting the CSI. For example, the terminal device may determine, according to Formulas (10) to (12), a resource for transmitting a CSI part 2.

In Case 4, because a priority index of the HARQ-ACK (CG-UCI) is 1, the terminal device preferentially determines a resource for transmitting the HARQ-ACK (CG-UCI), and then determines, based on the first parameter, the first resource and a resource for transmitting the CSI. That the terminal device determines the first resource and the resource for transmitting the second control information may refer to descriptions in Example #1, Example #3, and Example #4 in Case 1. Details are not described again.

In Case 5, because priority indexes of the HARQ-ACK (CG-UCI) and the CSI are 1, the terminal device preferentially determines a resource for transmitting the HARQ-ACK (CG-UCI) and a resource for transmitting the CSI, and then determines the first resource based on the first parameter.

For example, for a manner in which the terminal device determines the resource for transmitting the HARQ-ACK (CG-UCI), refer to Example #1 in Case 1. The terminal device determines, according to Formulas (15) to (18), a resource for transmitting a CSI part 1, and it is assumed that $Q'_{ACK/CG-UCI} = 0$. For Formulas (15) to (18), refer to Example #3 in Case 1. Usually, when a priority index of the CSI is greater than a priority index of the HARQ-ACK, the CSI may include only the CSI part 1. In this case, for a manner in which the terminal device determines the first resource based on the first parameter, refer to Example #4 in Case 1. Optionally, the terminal device may determine, according to Formulas (10) to (12), a resource for transmitting a CSI part 2.

In Case 6, because priority indexes of the HARQ-ACK (CG-UCI) and the XR-UCI are 1, the terminal device preferentially determines a resource for transmitting the HARQ-ACK (CG-UCI), then determines the first resource based on the first parameter, and finally determines a resource for transmitting the CSI (for details, refer to Example #1); or the terminal device preferentially determines a resource (an example of the first resource) for transmitting the HARQ-ACK (CG-UCI) and the XR-UCI (namely, the HARQ-ACK (CG-UCI) and the XR-UCI that are jointly encoded), and then determines a resource for transmitting the CSI (for details, refer to Example #2).

**Example #1**

For a manner in which the terminal device determines the resource for transmitting the HARQ-ACK (CG-UCI) and the first resource, refer to Example #1 and Example #2 in Case 1. Optionally, the terminal device determines the resource for transmitting the CSI. A specific determining manner is similar to Example #1 and Example #2 in Case 1. Details are not described again.

**Example #2**

For a manner in which the terminal device determines the resource for transmitting the HARQ-ACK (CG-UCI) and the XR-UCI, refer to Example #5 in Case 1. Optionally, the terminal device determines the resource for transmitting the CSI. A specific determining manner is similar to Example #5 in Case 1. Details are not described again.

Based on the foregoing solution, when the priority indexes of the control information are different, a resource for transmitting control information whose priority index has a value 1 is preferentially determined, so that HARQ-ACK transmission can be effectively ensured. In addition, transmission of a part of CSI information can improve downlink transmission quality of an XR service, and the XR-UCI can be used to improve resource utilization.

S402: Transmit the first control information on the first resource.

For example, in the CG period, the terminal device sends the first control information to the network device on the first resource. Correspondingly, the network device receives the first control information from the terminal device.

Optionally, the method further includes the following step.

S403: The terminal device receives indication information from the network device, where the indication information indicates the number of bits of the first control information.

The number of bits of the first control information (an example of the first parameter) may be used by the terminal device to determine the first resource. For details, refer to a plurality of examples in the foregoing two cases.

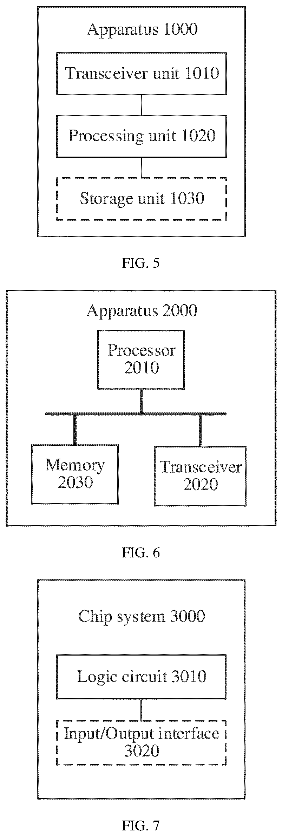

FIG. 5 is a diagram of a communication apparatus 1000 according to an embodiment of this application. The apparatus 1000 includes a transceiver unit 1010. The transceiver unit 1010 may be configured to implement a corresponding communication function. The transceiver unit 1010 may also be referred to as a communication interface or a communication unit.

Optionally, the apparatus 1000 may further include a processing unit 1020. The processing unit 1020 may be configured to process data.

Optionally, the apparatus 1000 further includes a storage unit. The storage unit may be configured to store instructions and/or data. The processing unit 1020 may read the instructions and/or the data in the storage unit, to enable the apparatus to implement actions of different devices in the foregoing method embodiment.

In a possible design, the apparatus 1000 may be the terminal device in the foregoing embodiment, or may be a component (for example, a chip) of the terminal device. The apparatus 1000 may implement the corresponding steps or procedures performed by the terminal device in the foregoing method embodiment. The transceiver unit 1010 may be configured to perform a receiving and sending-related operation of the terminal device in the foregoing method embodiment, for example, a receiving and sending-related operation of the terminal device in the embodiment shown in FIG. 1. The processing unit 1020 may be configured to perform a processing-related operation of the terminal device in the foregoing method embodiment, for example, a processing-related operation of the terminal device in the embodiment shown in FIG. 1.

FIG. 6 is a block diagram of a communication apparatus 2000 according to an embodiment of this application. The apparatus 2000 includes a processor 2010, and the processor 2010 is coupled to a memory 2020. Optionally, the apparatus further includes the memory 2020. The memory 2020 is configured to store a computer program or instructions and/or data. The processor 2010 is configured to execute the computer program or the instructions stored in the memory 2020, or read the data stored in the memory 2020, to perform the method in the foregoing method embodiments.

Optionally, there are one or more processors 2010.

Optionally, there are one or more memories 2020.

Optionally, the memory 2020 and the processor 2010 are integrated together or separately disposed.

Optionally, as shown in FIG. 6, the apparatus 2000 further includes a transceiver 2030, and the transceiver 2030 is configured to receive and/or send a signal. For example, the processor 2010 is configured to control the transceiver 2030 to receive and/or send the signal.

In a solution, the apparatus 2000 is configured to implement operations performed by the terminal device in the foregoing method embodiments.

For example, the processor 2010 is configured to execute the computer program or the instructions stored in the memory 2020, to implement related operations of the terminal device in the foregoing method embodiments, for example, the method performed by the terminal device in the embodiment shown in FIG. 1.

In another solution, the apparatus 2000 is configured to implement operations performed by the location server in the foregoing method embodiments.

For example, the processor 2010 is configured to execute the computer program or the instructions stored in the memory 2020, to implement related operations of the location server in the foregoing method embodiments, for example, the method performed by the location server in the embodiment shown in FIG. 1.

In an implementation process, steps of the method may be completed by using an integrated logic circuit of hardware in the processor 2010 or instructions in a form of software. The method disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 2020. The processor 2010 reads information in the memory 2020, and completes the steps of the method in combination with hardware of the processor 2010. To avoid repetition, details are not described herein again.

It should be understood that, in embodiments of this application, the processor may be one or more integrated circuits, and is configured to execute a related program, to perform the method embodiments of this application.

The processor (for example, the processor 2010) may include one or more processors and be implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a dedicated processor. For example, the processor 2010 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application, a software application, or the like. The program may be run in a processor and/or a computer, to enable the apparatus to perform various functions and/or processes described in this application.

The memory (for example, the memory 2020) may store data required by the processor (for example, the processor 2010) during software execution. The memory may be implemented by using any suitable storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification is intended to include but is not limited to these memories and any memory of another appropriate type.

The memory (for example, the memory 2020) and the processor (for example, the processor 2010) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

FIG. 7 is a block diagram of a chip system 3000 according to an embodiment of this application. The chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the terminal device in the foregoing method embodiments.

For example, the logic circuit 3010 is configured to implement a processing-related operation performed by the terminal device in the foregoing method embodiments, for example, a processing-related operation performed by the terminal device in the embodiment shown in FIG. 1. The input/output interface 3020 is configured to implement a sending and/or receiving-related operation performed by the terminal device in the foregoing method embodiments, for example, the sending and/or receiving-related operation performed by the terminal device in the embodiment shown in FIG. 1.

An embodiment of this application further provides a computer-readable storage medium. The computer-readable storage medium stores computer instructions for implementing the method performed by the terminal device in the foregoing method embodiments.

An embodiment of this application further provides a computer program product, including instructions. When the instructions are executed by a computer, the method performed by the terminal device in the foregoing method embodiments is implemented.

An embodiment of this application further provides a communication system. The communication system includes the terminal device and the network device in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the apparatus embodiments described above are only examples. For example, the foregoing division into units is merely a logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered as that the implementation goes beyond the scope of this application.

When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:

   determining, based on a first parameter, a first resource for transmitting first control information, wherein the first control information indicates that a physical uplink shared channel PUSCH resource is to be used or not used in a configured grant CG period, and the first parameter comprises a number of bits of the first control information, or the first parameter comprises a number of bits of the first control information and a second resource for transmitting second control information; and
   transmitting the first control information on the first resource, wherein
   the second control information comprises at least one of first information and channel state information CSI, and
   the first information comprises at least one of hybrid automatic repeat request HARQ and configured grant uplink control information CG-UCI.

2. The method according to claim 1, wherein a priority index of the first control information is the same as a priority index of the second control information; and

   the first parameter comprises the number of bits of the first control information and the second resource; or
   the first parameter comprises the number of bits of the first control information and a number of bits of the first information.

3. The method according to claim 2, wherein before determining, based on the first parameter, the first resource for transmitting the first control information, the method further comprises:
   determining, based on the number of bits of the first information, a resource for transmitting the first information.

4. The method according to claim 2, wherein the resource for transmitting the first information is the first resource, the first resource is determined based on the first parameter, and the first parameter comprises the number of bits of the first control information and the number of bits of the first information.

5. The method according to any one of claims 2 to 4, wherein the method further comprises:

   determining, based on the first resource, a resource for transmitting the CSI, wherein the first resource is determined based on the first parameter, and the first parameter comprises the number of bits of the first control information and the number of bits of the first information; or
   determining, based on the first resource and the resource for transmitting the first information, a resource for transmitting the CSI, wherein the first resource is determined based on the first parameter, and the first parameter comprises the number of bits of the first control information and the resource for transmitting the first information.

6. The method according to claim 1, wherein the second control information comprises the first information and the CSI, a priority index of the first control information is greater than a priority index of the second control information, and the first parameter comprises the number of bits of the first control information.

7. The method according to claim 6, wherein after determining, based on the first parameter, the first resource for transmitting the first control information, the method further comprises:
   determining, based on the first resource, a resource for transmitting the first information.

8.  The method according to claim 7, wherein the method further comprises:
    determining, based on the first resource and the resource for transmitting the first information, a resource for transmitting the CSI.

9.  The method according to claim 1, wherein a priority index of the first control information is greater than a priority index of the first information, and the priority index of the first control information is the same as a priority index of the CSI; and

    the first parameter comprises the number of bits of the first control information; or
    the first parameter comprises the number of bits of the first control information and a resource for transmitting the CSI.

10. The method according to claim 9, wherein after determining, based on the first parameter, the first resource for transmitting the first control information, the method further comprises:

    determining, based on the first resource, a resource for transmitting the first information, wherein the first resource is determined based on the first parameter, and the first parameter comprises the number of bits of the first control information; or
    determining, based on the first resource and the resource for transmitting the CSI, a resource for transmitting the first information, wherein the first resource is determined based on the first parameter, and the first parameter comprises the number of bits of the first control information and the resource for transmitting the CSI.

11. The method according to claim 9 or 10, wherein the method further comprises:

    determining, based on the first resource, the resource for transmitting the CSI, wherein the first resource is determined based on the first parameter, and the first parameter comprises the number of bits of the first control information; or
    determining, based on a number of bits of the CSI, the resource for transmitting the CSI.

12. The method according to claim 1, wherein a priority index of the first information is greater than a priority index of the first control information, and the priority index of the first control information is the same as a priority index of the CSI; and

    the first parameter comprises the number of bits of the first control information and a resource for transmitting the first information; or
    the first parameter comprises the number of bits of the first control information, a resource for transmitting the first information, and a resource for transmitting the CSI.

13. The method according to claim 12, wherein before determining, based on the first parameter, the first resource for transmitting the first control information, the method further comprises:
    determining, based on a number of bits of the first information, the resource for transmitting the first information.

14. The method according to claim 12 or 13, wherein the method further comprises:

    determining, based on the first resource and the resource for transmitting the first information, the resource for transmitting the CSI, wherein the first resource is determined based on the first parameter, and the first parameter comprises the number of bits of the first control information and the resource for transmitting the first information; or
    determining, based on the resource for transmitting the first information, the resource for transmitting the CSI.

15. The method according to claim 1, wherein a priority index of the first information is greater than a priority index of the first control information, the priority index of the first information is the same as a priority index of the CSI, and the first parameter comprises a resource for transmitting the CSI and a resource for transmitting the first information.

16. The method according to claim 15, wherein before determining, based on the first parameter, the first resource for transmitting the first control information, the method further comprises:
    determining, based on a number of bits of the first information, the resource for transmitting the first information.

17. The method according to claim 15 or 16, wherein the method further comprises:

determining, based on the resource for transmitting the first information, the resource for transmitting the CSI.

18. The method according to claim 1, wherein a priority index of the first information is the same as a priority index of the first control information, and the priority index of the first information is greater than a priority index of the CSI; and

the first parameter comprises a resource for transmitting the first information; or
the first parameter comprises a number of bits of the first information and the number of bits of the first control information.

19. The method according to claim 18, wherein before determining, based on the first parameter, the first resource for transmitting the first control information, the method further comprises:
determining, based on the number of bits of the first information, the resource for transmitting the first information.

20. The method according to claim 18, wherein the resource for transmitting the first information is the first resource, the first resource is determined based on the first parameter, and the first parameter comprises the number of bits of the first control information and the number of bits of the first information.

21. The method according to any one of claims 18 to 20, wherein the method further comprises:

determining, based on the first resource, a resource for transmitting the CSI, wherein the first resource is determined based on the first parameter, and the first parameter comprises the number of bits of the first control information and the number of bits of the first information; or
determining, based on the first resource and the resource for transmitting the first information, a resource for transmitting the CSI, wherein the first resource is determined based on the first parameter, and the first parameter comprises the number of bits of the first control information.

22. The method according to claim 1, wherein a priority index of the first information is the same as a priority index of the first control information, and a priority index of the CSI is greater than the priority index of the first information; and

the first parameter comprises a resource for transmitting the CSI and a resource for transmitting the first information; or
the first parameter comprises a resource for transmitting the CSI, a number of bits of the first information, and the number of bits of the first control information.

23. The method according to claim 22, wherein before determining, based on the first parameter, the first resource for transmitting the first control information, the method further comprises:
determining, based on a number of bits of the CSI, the resource for transmitting the CSI.

24. The method according to claim 22 or 23, wherein the method further comprises:

determining, based on the resource for transmitting the CSI, the resource for transmitting the first information; or
determining, based on the resource for transmitting the CSI and the first parameter, the resource for transmitting the first information, wherein the first parameter comprises the number of bits of the first information and the number of bits of the first control information.

25. The method according to any one of claims 1 to 24, wherein the method further comprises:
receiving indication information from a network device, wherein the indication information indicates the number of bits of the first control information.

26. The method according to any one of claims 1 to 25, wherein the first parameter further comprises a first offset, and the first offset is configured by using radio resource control RRC signaling, or is indicated by a media access control element MAC CE or downlink control information DCI.

27. The method according to any one of claims 1 to 25, wherein the first parameter further comprises a first offset, and the first offset is used to adjust data of a resource occupied by the first control information.

28. The method according to any one of claims 1 to 27, wherein the CG-UCI and the first control information do not multiplex a same PUSCH.

29. A communication apparatus, comprising:

a processor, wherein the processor is coupled to a memory, the memory is configured to store a program or instructions, and when the program or the instructions are executed by the processor, the apparatus is enabled to perform the method according to any one of claims 1 to 28.

30. A computer-readable storage medium, wherein the computer-readable storage medium stores a computer program, and when the computer program is run on a computer, the computer is enabled to perform the method according to any one of claims 1 to 28.

31. A computer program product, comprising computer program code, wherein when the computer program code is run, the method according to any one of claims 1 to 28 is implemented.

FIG. 1

FIG. 2

RRC/DCI
signaling resource
allocation

| Configured grant period | Configured grant period | Configured grant period |

PUSCH    PUSCH    PUSCH    Time

Same time-frequency
resource

FIG. 3

400

| Terminal device | | Network device |

S401: Determine, based on a
first parameter, a first
resource for transmitting first
control information

S402: Transmit the first control
information on the first resource

S403: Indication information

FIG. 4

Apparatus 1000

Transceiver unit 1010

Processing unit 1020

Storage unit 1030

FIG. 5

Apparatus 2000

Processor
2010

Memory
2030

Transceiver
2020

FIG. 6

Chip system 3000

Logic circuit 3010

Input/Output interface
3020

FIG. 7

## INTERNATIONAL SEARCH REPORT

| International application No. |
|---|
| **PCT/CN2024/078568** |

| A. | CLASSIFICATION OF SUBJECT MATTER |
|---|---|

H04W72/04(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, ENTXTC, CNTXT, VEN: 未使用, 没有使用, 比特数, 长度, 位宽, 优先级, 复用, 混合自动重传, 配置授权, 信道状态, unused, not used, bit, length, size, bitwidth, number, priority, multiplex, HARQ, CG-UCI, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | FUTUREWEI. "XR-Specific Capacity Enhancements" *3GPP TSG RAN WG1 Meeting #112, R1-2300070*, 17 February 2023 (2023-02-17), section 2.4 | 1, 29-31 |
| X | OPPO. "Discussion on XR Specific Capacity Enhancements" *3GPP TSG RAN WG1 #112, R1-2300291*, 17 February 2023 (2023-02-17), section 3 | 1, 29-31 |
| X | SPREADTRUM COMMUNICATIONS. "Discussion on XR-Specific Capacity Enhancements" *3GPP TSG RAN WG1 #112, R1-2300235*, 17 February 2023 (2023-02-17), section 2.2 | 1, 29-31 |
| X | SAMSUNG. "Capacity Improvements for XR" *3GPP TSG RAN WG1 #112, R1-2301282*, 17 February 2023 (2023-02-17), section 2 | 1, 29-31 |
| Y | FUTUREWEI. "XR-Specific Capacity Enhancements" *3GPP TSG RAN WG1 Meeting #112, R1-2300070*, 17 February 2023 (2023-02-17), section 2.4 | 1-28 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 April 2024** | **08 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/078568**

### C. DOCUMENTS CONSIDERED TO BE RELEVANT

| Category* | Citation of document, with indication, where appropriate, of the relevant passages | Relevant to claim No. |
|---|---|---|
| Y | NTT DOCOMO, INC. "Discussion on XR Specific Capacity Improvement Enhancements" *3GPP TSG RAN WG1 #112, R1-2301511*, 17 February 2023 (2023-02-17), section 2 | 1-28 |
| Y | OPPO. "Discussion on XR Specific Capacity Enhancements" *3GPP TSG RAN WG1 #112, R1-2300291*, 17 February 2023 (2023-02-17), section 3 | 1-28 |
| Y | SPREADTRUM COMMUNICATIONS. "Discussion on XR-Specific Capacity Enhancements" *3GPP TSG RAN WG1 #112, R1-2300235*, 17 February 2023 (2023-02-17), section 2.2 | 1-28 |
| Y | SAMSUNG. "Capacity Improvements for XR" *3GPP TSG RAN WG1 #112, R1-2301282*, 17 February 2023 (2023-02-17), section 2 | 1-28 |
| Y | APPLE INC. "Design Considerations on Rel-17 Intra-UE Multiplexing/Prioritization" *3GPP TSG RAN WG1 #106bis-E, R1-2110416*, 13 October 2021 (2021-10-13), sections 11-12 | 2-28 |
| A | WO 2022151091 A1 (HUAWEI TECHNOLOGIES CO., LTD.) 21 July 2022 (2022-07-21) entire document | 1-31 |

Form PCT/ISA/210 (second sheet) (July 2022)

**INTERNATIONAL SEARCH REPORT**
Information on patent family members

International application No.

**PCT/CN2024/078568**

| Patent document cited in search report | | | Publication date (day/month/year) | Patent family member(s) | | | Publication date (day/month/year) |
|---|---|---|---|---|---|---|---|
| WO | 2022151091 | A1 | 21 July 2022 | CN | 116547936 | A | 04 August 2023 |

Form PCT/ISA/210 (patent family annex) (July 2022)

43

**REFERENCES CITED IN THE DESCRIPTION**

**Patent documents cited in the description**

- CN 202310216808
- CN 202310487760